# EUROPEAN PATENT SPECIFICATION

(11) **EP 2 957 572 B1**
(45) Date of publication and mention of the grant of the patent: **08.04.2020**
(21) Application number: 14751252.9
(22) Date of filing: 14.02.2014
(51) Int. Cl.: C08C 19/26, C08F 4/54, C08K 3/04, C08K 3/36, C08L 15/00, C08L 101/00, C08C 19/02, C08F 136/06, C08C 19/30, C08L 19/00, C08F 8/04, C08F 297/04, C08L 23/12, C08L 67/02

(54) **METHOD FOR PRODUCING HYDROGENATED CONJUGATED DIENE POLYMER**
VERFAHREN ZUR HERSTELLUNG EINES HYDRIERTEN KONJUGIERTEN DIENPOLYMERS
PROCÉDÉ DE PRODUCTION DE POLYMÈRE DIÈNE CONJUGUÉ HYDROGÉNÉ

(30) Priority: 14.02.2013 JP 2013026616
(43) Date of publication of application: 23.12.2015
(73) Proprietor: JSR Corporation, Minato-ku Tokyo 105-8640 (JP)
(72) Inventor: NOSAKA, Naoya, Tokyo 105-8640 (JP); SHIBATA, Masahiro, Tokyo 105-8640 (JP); TOYODA, Nobuyuki, Tokyo 105-8640 (JP); ABE, Shigeru, Tokyo 105-8640 (JP); UEDA, Jirou, Tokyo 105-8640 (JP)
(74) Representative: TBK
(86) International application number: PCT/JP2014/053419
(87) International publication number: WO 2014/126184

(56) References cited:
- EP-A2- 1 245 585
- WO-A1-2011/031943
- WO-A1-2013/084671
- JP-A- 2010 538 109
- JP-A- 2011 102 347
- JP-A- 2013 028 781
- JP-A- 2013 504 662

## Description

### Technical Field

The present invention relates to a method for producing a hydrogenated conjugated diene polymer. More specifically, it relates to a method for producing a hydrogenated conjugated diene polymer using a modified polymerization initiator, a hydrogenated conjugated diene polymer obtained by the production method, and a polymer composition containing the polymer.

### Background Art

A hydrogenated block copolymer that is a hydrogenation product of a block copolymer formed from a conjugated diene compound and an aromatic vinyl compound has a relatively high compatibility with non-polar resins such as polyolefin resins and polystyrene resins and non-polar rubbers such as ethylene-propylene rubbers. Therefore, various compositions containing the hydrogenated block copolymer have been produced and widely utilized.

Since the hydrogenated block copolymer has low compatibility with polar resins such as polyethylene terephthalate (PET), acrylonitrile-butadiene-styrene copolymer resins (ABS), and Nylons, it is necessary to impart a polar group to the hydrogenated block copolymer in order to ensure physical properties durable in use. For example, Patent Document 1 shows a hydrogenated conjugated diene block copolymer modified with an amino group.

However, the conventional hydrogenated conjugated diene block copolymer modified with an amino group involves problems of bad processability at compounding with a thermoplastic resin or the like and bad physical properties of a polymer alloy after compounding.

Moreover, for example, Patent Document 2 proposes a modified diene-based polymer rubber obtained from a step 1 of polymerizing a conjugated diene polymer or a conjugated diene polymer and an aromatic vinyl monomer in a hydrocarbon solvent in the presence of an alkali metal catalyst to obtain an active polymer having an alkali metal end and a step 2 of reacting the active polymer with a compound represented by a specific formula to obtain a modified polymer rubber.

Furthermore, for example, Patent Document 3 also proposes a method for producing a modified polymer which increases interactions with silica and carbon black and which can improve breaking characteristics, abrasion resistance, and low heat generation properties.

However, the above method of modifying the active polymerization end of the active polymer with a modifier involves a problem that there is a limitation in the case where the amount of modification is intended to increase since one modifier is reacted per one molecule of the polymer.

### Related Art Documents

### Patent Document

Patent Document 1: JP-A-2005-298797
Patent Document 2: JP-A-2005-290355
Patent Document 3: WO2003/048216 pamphlet

### Summary of the Invention

### Problems to Be Solved by the Invention

An object of the invention is to provide a method for producing a hydrogenated conjugated diene polymer that is excellent in the improvement in dispersibility at the time of compounding with a filler, is excellent in the reduction in hysteresis loss after compounding, and enables the formation of a polymer alloy which has excellent processability at the time of compounding with a thermoplastic resin or the like and has excellent physical properties after compounding. In addition, another object of the invention is to provide a hydrogenated conjugate diene polymer obtained by the above production method, a polymer composition containing the polymer, and a molded body composed of the polymer composition.

### Means for Solving the Problems

In order to solve the above-mentioned problem, the present inventors have made intensive studies. As a result, they have found that it is possible to solve the above problem by a production method having the following features, and thus have accomplished the present invention. That is, the present invention relates to, for example, the following [1] to [6].

[1] A method for producing a hydrogenated conjugated diene polymer, the method comprising a step of polymerizing at least a conjugated diene compound in the presence of a polymerization initiator composed of an amine compound having at least one structure of the formulae (x) and (y) and at least one metal compound selected from alkali metal compounds and alkaline earth metal compounds to obtain a conjugated diene polymer and
   a step of hydrogenating the conjugated diene polymer. 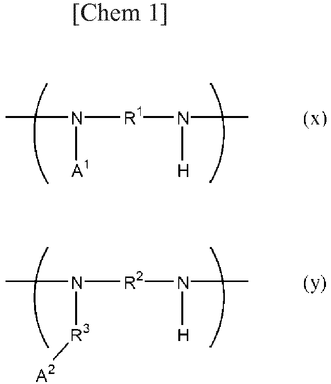 wherein, in the formula (x), R¹ is a hydrocarbylene group, the hydrocarbylene group in R¹ may contain a heteroatom as long as the hydrocarbylene group does not have an active hydrogen atom, and A¹ is a trihydrocarbylsilyl group; in the formula (y), R² and R³ are each independently a hydrocarbylene group, the hydrocarbylene group in each of R² and R³ may contain a heteroatom as long as the hydrocarbylene group does not have an active hydrogen atom, and A² is a functional group which has at least one atom selected from a nitrogen atom N, a phosphorus atom P, and a sulfur atom S, has a trihydrocarbylsilyl group, and does not have an active hydrogen atom and in which the atom that is bonded to R³ is N, P or S; and the above R¹ and A¹ may be bonded to each other to form a cyclic structure and a part of the above R², R³, and A² may be bonded to each other to form a cyclic structure.
[2] The method for producing a hydrogenated conjugated diene polymer according to above [1], wherein the amine compound having a structure represented by the formula (x) is at least one compound selected from a compound represented by the formula (x1) and a compound represented by the formula (x2): 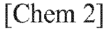 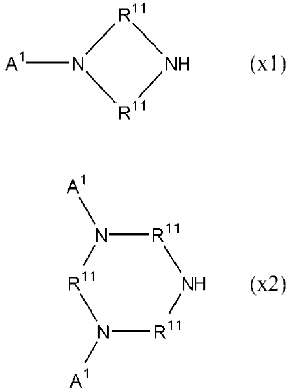 wherein, in the formulae (x1) and (x2), R¹¹'s are each independently a hydrocarbylene group, and the hydrocarbylene group in R¹¹ may contain a heteroatom as long as the hydrocarbylene group does not have an active hydrogen atom; A¹'s are each independently a trihydrocarbylsilyl group; a plurality of R¹¹'s and A¹'s may be each the same or different; and the above R¹¹ and A¹ may be bonded to each other to form a cyclic structure.
[3] The method for producing a hydrogenated conjugated diene polymer according to above [1], wherein the amine compound having a structure represented by the formula (y) is at least one compound selected from a compound represented by the formula (y1) and a compound represented by the formula (y2): 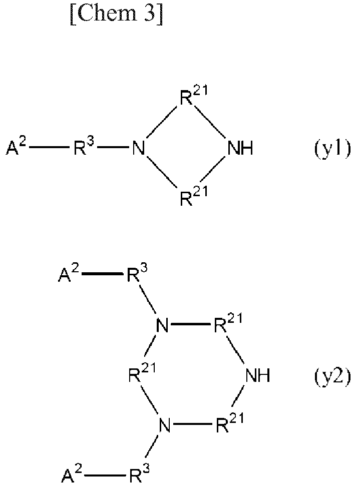 wherein, in the formulae (y1) and (y2), R²¹'s and R³'s are each independently a hydrocarbylene group, and the hydrocarbylene group in each of R²¹ and R³ may contain a heteroatom as long as the hydrocarbylene group does not have an active hydrogen atom; A² is a functional group which has at least one atom selected from a nitrogen atom N, a phosphorus atom P, and a sulfur atom S, has a trihydrocarbylsilyl group, and does not have an active hydrogen and in which the atom that is bonded to R³ is N, P or S; a plurality of R²¹'s, R³'s, and A²'s may be each the same or different; and a part of the above R²¹, R³, and A² may be bonded to each other to form a cyclic structure.
[4] A hydrogenated conjugated diene polymer having at least one structure of the formulae (X) and (Y) at the polymer end: 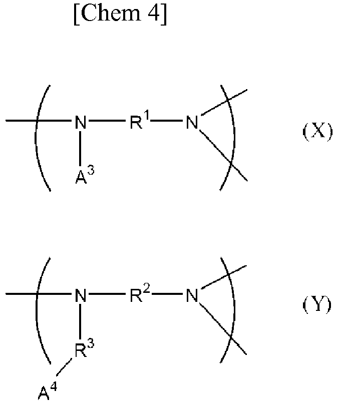 wherein, in the formula (X), R¹ is a hydrocarbylene group, and the hydrocarbylene group in R¹ may contain a heteroatom as long as the hydrocarbylene group does not have an active hydrogen atom, and A³ is a hydrogen atom or a trihydrocarbylsilyl group; in the formula (Y), R ² and R³ are each independently a hydrocarbylene group, the hydrocarbylene group in each of R² and R³ may contain a heteroatom as long as the hydrocarbylene group does not have an active hydrogen atom, and A⁴ is a functional group which has at least one atom selected from a nitrogen atom N, a phosphorus atom P, and a sulfur atom S and in which all or a part of the atoms may be protected with a trihydrocarbylsilyl group and the atom that is bonded to R³ is N, P or S; and the above R¹ and A³ may be bonded to each other to form a cyclic structure and a part of the above R², R³, and A⁴ may be bonded to each other to form a cyclic structure.
[5] A polymer composition comprising the hydrogenated conjugated diene polymer according to above [4] and at least one selected from carbon black and silica.
[6] A polymer composition comprising the hydrogenated conjugated diene polymer according to above [4] and at least one polymer selected from a non-polar polymer and a polar polymer.

### Effects of the Invention

According to the invention, it is possible to provide a hydrogenated conjugated diene polymer that is excellent in the improvement in dispersibility at the time of compounding with a filler, is excellent in the reduction in hysteresis loss after compounding, and enables the formation of a polymer alloy which has excellent processability at the time of compounding with a thermoplastic resin or the like and has excellent physical properties after compounding.

For example, a crosslinked body formed from a polymer composition containing the hydrogenated conjugated diene polymer is excellent in low hysteresis loss properties (70°Ctanδ), wet-skid resistance (0°Ctanδ), and abrasion resistance and thus can result in excellent low fuel-consumption performance in the case where the body is used as a material of an automobile tire (especially tread) or the like.

### Embodiments for Carrying Out the Invention

The following will describe terms used in the invention.

In the present Description, a compound represented by the formula (i) (i is a formula number) is also referred to as "compound (i)", a constituent unit derived from a compound (x) in the polymer is also referred to as a "compound x unit", the hydrogenation reaction is also referred to as a "hydrogenation reaction", a hydrogenation catalyst is also referred to as a "hydrogenation catalyst", a conjugated diene polymer after hydrogenation is also referred to as a "hydrogenated conjugated diene polymer", and a hydrogenation rate is also referred to as a "hydrogenation rate".

A "vinyl bond content" is a total ratio (in terms of % by mol) of the units incorporated by 1,2-bond and 3,4-bond among the conjugated diene compound units incorporated in the bonding manners of 1,2-bond, 3,4-bond, and 1,4-bond. The vinyl bond content, the 1,2-bond content, and the 3,4-bond content can be determined by an infrared absorption spectrum method (Morello method).

The "active hydrogen" refers to the hydrogen atom bonded to an atom other than a carbon atom.

The "polymerization" is used in the sense including homopolymerization and copolymerization.

The following will describe embodiments for carrying out the invention including preferable embodiments.

### [Method for Producing Hydrogenated Conjugated Diene Polymer]

The method for producing a hydrogenated conjugated diene polymer of the invention comprises:
(1) a step of polymerizing at least a conjugated diene compound in the presence of a polymerization initiator (hereinafter also referred to as "modified polymerization initiator") composed of an amine compound having at least one structure of the formulae (x) and (y) and at least one metal compound selected from alkali metal compounds and alkaline earth metal compounds to obtain a conjugated diene polymer and
(2) a step of hydrogenating the conjugated diene polymer.

### [Step (1)1 (Step of producing conjugated diene polymer before hydrogenation)

One embodiment of the step (1) contains a step (1a) of performing a polymerization reaction. According to need, it contains one or two or more steps selected from a step (1b) of performing a coupling reaction on the conjugated diene polymer having an active point obtained in the polymerization reaction or the like, a step (1c) of reacting the conjugated diene polymer having an active point obtained in the polymerization reaction or the like with a modifier capable of reacting with the active point to further modify the polymer, and a step (1d) of performing a polymerization termination reaction on the conjugated diene polymer having an active point obtained in the polymerization reaction, the coupling reaction, or the modification reaction.

### <<Step (1a)>> (Polymerization reaction)

In the step (1a), a monomer such as a conjugated diene compound is polymerized in the presence of the modified polymerization initiator to obtain a conjugated diene polymer. As a polymerization mode, it is preferable to adopt anionic polymerization (living anionic polymerization).

The phrase "a monomer is polymerized in the presence of the modified polymerization initiator" includes an embodiment of feeding the amine compound and the metal compound to a reaction vessel individually or feeding a reaction product of the amine compound and the metal compound to a reaction vessel and polymerizing a monomer in the reaction vessel.

As the polymerization method, it is possible to use any of a solution polymerization method, a bulk polymerization method, and a gas-phase polymerization method. Of these, the solution polymerization method is preferable. As the polymerization mode, it is possible to use either a batch one or continuous one.

Liquid phase temperature of the polymerization reaction in the solution polymerization method is preferably from -20 to 150°C, more preferably from 0 to 120°C, and particularly preferably from 20 to 100°C. The polymerization reaction is preferably performed under a pressure sufficient for maintaining the monomer substantially as a liquid phase. Such a pressure can be obtained by a method of pressurizing the inside of the reaction vessel with a gas (example: nitrogen gas) inert to the polymerization reaction or the like.

Examples of specific polymerization methods in the case of using the solution polymerization method includes a method of anionic polymerization of a monomer such as a conjugated diene compound in the presence of a polymerization initiator and a vinyl content regulator that is used as required, in a solvent composed of an organic solvent inert to the polymerization reaction.

In the case of using the solution polymerization method, the monomer concentration in the solution is preferably from 5 to 50% by mass, and more preferably from 10 to 30% by mass from the standpoint of maintaining the balance between productivity and easiness of polymerization control.

The conjugated diene polymer obtained by the polymerization reaction may be a homopolymer composed of a conjugated diene compound, may be a random copolymer composed of a conjugated diene compound and another monomer such as an aromatic vinyl compound, or may be a block copolymer composed of conjugated diene compounds or a conjugated diene compound and another monomer such as an aromatic vinyl compound.

The conjugated diene block copolymer can be obtained by block polymerization of conjugated diene compounds or block copolymerization of a conjugated diene compound and another monomer such as an aromatic vinyl compound. From the standpoints of the physical properties and moldability of the polymer composition to be mentioned later, the conjugated diene block copolymer is preferably a block copolymer containing two or more polymer blocks selected from the following polymer blocks (A) to (D).
(A) An aromatic vinyl polymer block in which the amount of the aromatic vinyl compound unit is 80% by mass or more.
(B) A conjugated diene polymer block in which the amount of the conjugated diene compound unit is 80% by mass or more and the vinyl bond content is less than 30% by mol.
(C) A conjugated diene polymer block in which the amount of the conjugated diene compound unit is 80% by mass or more and the vinyl bond content is from 30 to 90% by mol.
(D) A random copolymer block of the conjugated diene compound and the aromatic vinyl compound in which the amount of the conjugated diene compound unit is more than 20% by mass and less than 80% by mass.

When the polymer block is a copolymer block formed from two or more compounds, it may be a random type or a so-called taper type in which the content of the conjugated diene compound unit or the aromatic vinyl compound unit continuously changes in the polymer block, depending on the purpose of the polymer composition.

Examples of the "block copolymer containing two or more polymer blocks selected from the following polymer blocks (A) to (D)" include (A)-(B), (A)-(C), (A)-(D), (B)-(C), (B)-(D), [(A)-(B)] x-Y, [(A)-(C)] x-Y, [(A)-(D)] x-Y, [(B)-(C)] x-Y, [(B)-(D)] x-Y, [(B)-(A)] x-Y, [(C)-(A)] x-Y, [(D)-(A)] x-Y, (A)-(B)-(D), (A)-(B)-(A), (A)-(C)-(A), (A)-(C)-(B), (A)-(D)-(A), (A)-(D)-(B), (B)-(A)-(B), [(A)-(B)-(D)] x-Y, [(A)-(B)-(A)] x-Y, [(A)-(C)-(A)] x-Y, [(A)-(C)-(B)] x-Y, [(A)-(D)-(A)] x-Y , [(B)-(A)-(B)] x-Y, (A)-(B)-(A)-(B), (B)-(A)-(B)-(A), [(A)-(B)-(A)-(B)] x-Y, (A)-(B)-(A)-(B)-(A), [(A)-(B)-(A)-(B)-(A)] x-Y, (B)-(A)-(B)-(D), (B)-(A)-(B)-(A), (B)-(A)-(C)-(A), (B)-(A)-(C)-(B), (B)-(A)-(D)-(A), [(C)-(A)-(B)-(D)] x-Y, [(C)-(A)-(B)-(A)] x-Y, [(C)-(A)-(C)-(A)] x-Y, [(C)-(A)-(C)-(B)] x-Y, [(C)-(A)-(D)-(A)] x-Y , (C)-(A)-(B)-(A)-(B), (C)-(B)-(A)-(B)-(A), (C)-(A)-(B)-(A)-(C), [(C)-(A)-(B)-(A)-(B)] x-Y, (C)-(A)-(B)-(A)-(B)-(A), [(C)-(A)-(B)-(A)-(B)-(A)] x-Y, and the like (wherein, x≥2, and Y is a residual group of a coupling agent). Here, copolymers obtained in the coupling reaction to be mentioned later are also exemplified. When the block copolymer is shaped into a pellet form, the block polymer preferably contains at least one polymer block (A) and/or at least one polymer block (B) as an outer block component of the conjugated diene block copolymer.

The following will describe each component to be used in the polymerization reaction.

### <Modified Polymerization Initiator>

In the invention, a modified polymerization initiator composed of an amine compound having at least one structure of the formulae (x) and (y) and at least one metal compound selected from alkali metal compounds and alkaline earth metal compounds. The modified polymerization initiator can be, for example, obtained by reacting the amine compound with the metal compound.

By using the modified polymerization initiator, a modification group derived from the amine compound can be introduced into the polymerization initiation end of the conjugated diene polymer. Thereby, an N atom which becomes an interaction point for increasing dispersibility of various fillers or a reaction point for working as a compatibilizer with various polymers is introduced into the polymerization initiation end. In one embodiment, it is possible to convert the N atom into an active amino group through deprotection by hydrolysis, depending on objective physical properties. 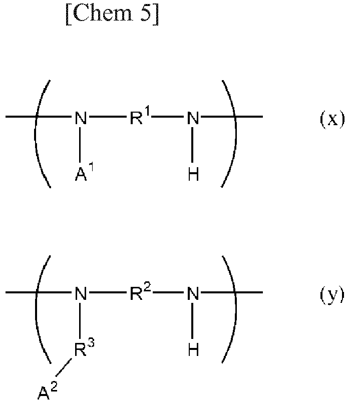 wherein, in the formula (x), R¹ is a hydrocarbylene group, and the hydrocarbylene group in R¹ may contain a heteroatom as long as the hydrocarbylene group does not have an active hydrogen atom, and A¹ is a trihydrocarbylsilyl group; in the formula (y), R² and R³ are each independently a hydrocarbylene group, the hydrocarbylene group in each of R² and R³ may contain a heteroatom as long as the hydrocarbylene group does not have an active hydrogen atom; and A² is a functional group which has at least one atom selected from a nitrogen atom N, a phosphorus atom P, and a sulfur atom S, has a trihydrocarbylsilyl group, and does not have an active hydrogen atom and in which the atom that is bonded to R³ is N, P or S.

The above R¹ and A¹ may be bonded to each other to form a cyclic structure. That is, an atom in R¹ and an atom in A¹ may be bonded to form a cyclic structure. A part of the above R², R³, and A² may be bonded to each other to form a cyclic structure. That is, an atom in R ² and an atom in R³ may be bonded to form a cyclic structure, an atom in R² and an atom in A² may be bonded to form a cyclic structure, or an atom in R³ and an atom in A² may be bonded to form a cyclic structure.

Examples of the hydrocarbylene group include a methylene group, an alkylene group, an arylene group, and an aralkylene group. The hydrocarbylene group has usually from 1 to 10 carbon atoms, and preferably from 1 to 3.

In the present Description, the hydrocarbylene group having no active hydrogen and containing a heteroatom is a group in which one or two or more atoms or groups contained in the hydrocarbylene group are replaced with the heteroatom and which does not have an active hydrogen. However, it is preferable that the carbon atom bonded to the nitrogen atom described in the formulae (x) and (y) or the carbon atom bonded to terminal N, P, or S in A² is not replaced with the heteroatom.

Examples of the heteroatom include an oxygen atom, a sulfur atom, a nitrogen atom, a silicon atom, and a halogen atom. However, a nitrogen atom bonded to -A¹ or - R³-A² is excluded. A¹, R³, and A² in the above formulae have the same meanings as those of the same symbols in the formulae (x) and (y), respectively. Examples of substituents containing a nitrogen atom include imino groups and amino groups (-NR-, -NR₂ (R's are each independently a hydrocarbon group)).

The trihydrocarbylsilyl group means a group represented by -SiR₃ (wherein R's are each independently a hydrocarbon group). Examples of the hydrocarbyl group, i.e., a hydrocarbon group, of the trihydrocarbylsilyl group include alkyl groups, aryl groups, and aralkyl groups. The hydrocarbyl group has usually from 1 to 10 carbon atoms, and preferably from 1 to 4. The trihydrocarbylsilyl group is preferably a trialkylsilyl group, and particularly preferably a trimethylsilyl group or a t-butyldimethylsilyl group.

The trihydrocarbylsilyl group in A² is preferably bonded to at least one atom selected from a nitrogen atom N, a phosphorus atom P, and a sulfur atom S. A² is preferably a group represented by -XRₙ (wherein X is N. P, or S; R's are each independently a trihydrocarbylsilyl group; n is 2 when X is N, is 2 when X is P, and is 1 when X is S).

Examples of the amine compound having a structure represented by the formula (x) include at least one compound selected from a compound represented by the formula (x1) and a compound represented by the formula (x2) and specifically include compounds represented by the formula (x1-1), the formula (x1-2), and the formula (x2-1). 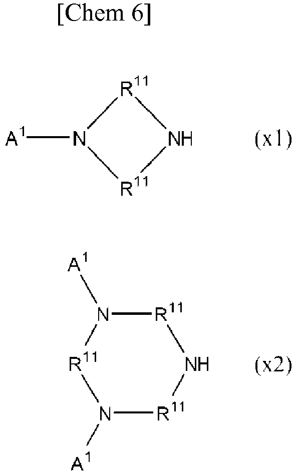 wherein, in the formulae (x1) and (x2), R¹¹'s are each independently a hydrocarbylene group, and the hydrocarbylene group in R¹¹ may contain a heteroatom as long as the hydrocarbylene group does not have an active hydrogen atom, is preferably a methylene group or an alkylene group having 2 to 10 carbon atoms, and is more preferably a methylene group or an ethylene group; A¹'s are each independently a trihydrocarbylsilyl group, preferably a trialkylsilyl group, and more preferably a trimethylsilyl group or a t-butyldimethylsilyl group; and a plurality of R¹¹'s and A¹'s may be each the same or different.

The above R¹¹ and A¹ may be bonded to each other to form a cyclic structure. That is, an atom in R¹¹ and an atom in A¹ may be bonded to form a cyclic structure.

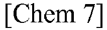

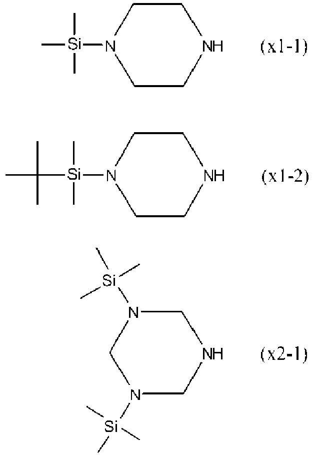

Examples of the amine compound having a structure represented by the formula (y) is at least one compound selected from a compound represented by the formula (y1) and a compound represented by the formula (y2) and specifically include compounds represented by the formula (y1-1), the formula (y1-2), and the formula (y2-1). 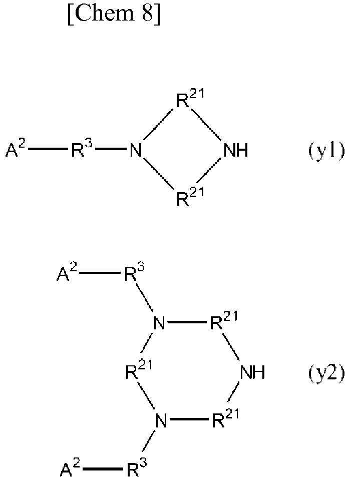 wherein, in the formulae (y1) and (y2), R²¹'s and R³'s are each independently a hydrocarbylene group, and the hydrocarbylene group in each of R²¹ and R³ may contain a heteroatom as long as the hydrocarbylene group does not have an active hydrogen atom, is preferably a methylene group or an alkylene group having 2 to 10 carbon atoms, and is more preferably a methylene group or an ethylene group; A² is a functional group which has at least one atom selected from a nitrogen atom N, a phosphorus atom P, and a sulfur atom S, has a trihydrocarbylsilyl group, and does not have an active hydrogen and in which the atom that is bonded to R³ is N, P or S.

A² is preferably a group represented by -XRₙ (wherein X is N. P, or S; R's are each independently a trihydrocarbylsilyl group; n is 2 when X is N, is 2 when X is P, and is 1 when X is S).

A plurality of R²¹'s, R³'s, and A²'s may be each the same or different.

Moreover, a part of the above R²¹, R³, and A² may be bonded to each other to form a cyclic structure. That is, an atom in R²¹ and an atom in R³ may be bonded to form a cyclic structure, an atom in R²¹ and an atom in A² may be bonded to form a cyclic structure, or an atom in R³ and an atom in A² may be bonded to form a cyclic structure.

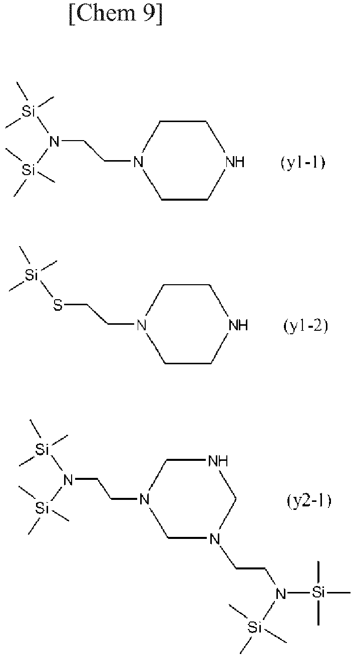

The modified polymerization initiator can be prepared by adding the above amine compound and the above metal compound in the polymerization system (in-situ). Alternatively, the modified polymerization initiator can be added into the polymerization system after being prepared from the above amine compound and the above metal compound beforehand.

For example, the modified polymerization initiator can be obtained by feeding the above amine compound and the above metal compound into a polymerization solution containing a monomer, a solvent, and the like and mixing and reacting these two compounds. Alternatively, the modified polymerization initiator can be also obtained by mixing and reacting the above amine compound and the above metal compound beforehand prior to the feed into the polymerization solution.

Examples of the alkali metal in the alkali metal compound include lithium, sodium, and potassium. Examples of the alkaline earth metal in the alkaline earth metal compound include calcium and magnesium.

Of these, the alkali metal compound is preferable and lithium is particularly preferable as the alkali metal. In the present Description, hereinafter, explanation is conducted using lithium as an example but an embodiment in which another alkali metal or an alkaline earth metal is used instead of lithium is also possible.

The alkali metal compound is preferably an alkyllithium and examples thereof include alkyllithiums having 1 to 4 carbon atoms. Examples of the alkyllithiums having 1 to 4 carbon atoms include methyllithium, ethyllithium, n-propyllithium, iso-propyllithium, n-butyllithium, and sec-butyllithium.

The amount of the amine compound to be used is preferably from 0.2 to 20 mmol, more preferably from 0.3 to 10 mmol, and further preferably from 0.5 to 3 mmol per 100 g of the monomer. In the case where a reaction product of the above amine compound and the above metal compound is added to the polymerization system, the amount is the amount of the amine compound used for forming the reaction product. In the case of block polymerization, the amount of the amine compound to be used is an amount per 100 g of the whole monomers.

The amount of the metal compound to be used is preferably from 10 to 1 mol, more preferably from 5 to 1 mol, and further preferably from 2 to 1 mol based on 1 mol of the active hydrogen on the nitrogen atom of the amine compound.

### <Conjugated Diene Compound>

Examples of the conjugated diene compound (conjugated diene monomer) to be used in the invention include 1,3-butadiene, isoprene, 2,3-dimethyl-1,3-butadiene, 1,3-pentadiene, 1,3-hexadiene, 1,3-heptadiene, 2,3-dimethylbutadiene, 2-phenyl-1,3-butadiene, 3-methyl-1,3-pentadiene, and 2-chloro-1,3-butadiene. Of these, 1,3-butadiene, isoprene, and 2,3-dimethyl-1,3-butadiene are preferable.

The conjugated diene compounds may be used singly or two or more thereof may be used in combination.

### <Other Monomers>

In the invention, a monomer (hereinafter also referred to as "other monomer") other than the conjugated diene compound can be used as a monomer and an aromatic vinyl compound (aromatic vinyl monomer) can be preferably used.

Examples of the aromatic vinyl compound include styrene, 2-methylstyrene, 3-methylstyrene, 4-methylstyrene, α-methylstyrene, 2,4-dimethylstyrene, 2,4-diisopropylstyrene, 4-tert-butylstyrene, 5-t-butyl-2-methylstyrene, vinylethylbenzene, divinylbenzene, trivinylbenzene, divinylnaphthalene, tert-butoxystyrene, vinylbenzyldimethylamine, (4-vinylbenzyl) dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinyltoluene, vinylpyridine, diphenylethylene, tertiary amino group-containing diphenylethylene. Of these, styrene is preferable.

The aromatic vinyl compounds may be used singly or two or more thereof may be used in combination.

In the case where copolymerization is performed in combination of the conjugated diene compound and the aromatic vinyl compound, it is preferable to use 1,3-butadiene and styrene. These compounds are excellent in view of easy availability and high living character in anionic polymerization.

In the case where copolymerization is performed in combination of the conjugated diene compound and the aromatic vinyl compound, the weight ratio of the aromatic vinyl compound to the conjugated diene compound is preferably from 0.5/99.5 to 55/45, and more preferably from 5/95 to 50/50 from the standpoint of the balance between the low hysteresis loss properties and wet skid resistance of the resulting crosslinked polymer.

As another monomer other than the aromatic vinyl compound, a functional group-containing monomer may be mentioned. When the functional group-containing monomer is polymerized to introduce a functional group into a copolymer, the functional group in the copolymer can be activated by the polymerization initiator. For example, it is also effective to lithiate the functional group part of a copolymer containing an isobutylene unit, a p-methylstyrene unit, and a p-halogenated methylsyrene unit to form an active site. As the other monomer, for example, 1-(4-N,N-dimethylaminophenyl)-1-phenylethylene may be mentioned.

### <Solvent>

As the solvent in the solution polymerization method, for example, an organic solvent inert to the polymerization, such as a hydrocarbon solvent, can be used. Examples of the hydrocarbon solvent include aliphatic hydrocarbon solvents, alicyclic hydrocarbon solvents, and aromatic hydrocarbon solvents, and hydrocarbon solvents having 3 to 8 carbon atoms are preferable.

Examples of the hydrocarbon solvents having 3 to 8 carbon atoms include propane, n-butane, isobutane, n-pentane, isopentane, hexane, heptane, propene, 1-butene, isobutene, trans-2-butene, cis-2-butene, 1-pentene, 2-pentene, 1-hexene, 2-hexene, benzene, toluene, xylene, ethylbenzene, cyclopentane, methylcyclopentane, cyclohexane, methylcyclohexane, and cyclohexene.

The solvents may be used singly or two or more thereof may be used in combination.

### <Vinyl Content Regulator>

The vinyl content regulator (hereinafter also referred to as "randomizer") can be used for regulating the vinyl bond content derived from the conjugated diene compound. For example, the microstructure of the conjugated diene block copolymer, i.e., 1,2-bond content and 3,4-bond content can be controlled by using the randomizer together with the hydrocarbon solvent.

As the randomizer, Lewis bases such as ethers and amines may be mentioned, and specifically there may be mentioned ethers such as tetrahydrofuran, 1,4-dioxane, diethyl ether, propyl ether, butyl ether, higher ethers, 2,2-di(tetrahydrofuryl)propane, tetrahydrofurfuryl methyl ether, tetrahydrofurfuryl ethyl ether, bis(tetrahydrofurfuryl) formal, dimethoxybenzene, 2-(2-ethoxyethoxy)-2-methylpropane, and ether derivatives of polyalkylene glycols such as ethylene glycol dimethyl ether, ethylene glycol dibutyl ether, diethylene glycol dimethyl ether, diethylene glycol dibutyl ether, propylene glycol diethyl ether, and propylene glycol ethyl propyl ether; tertiary amines such as tetramethylethylenediamine, pyridine, triethylamine, tributylamine, and N-methylmorpholine.

The randomizers may be used singly or two or more thereof may be used in combination.

### <<Step (1b)>> (Coupling Reaction)

The production method of the invention may comprise a step (1b) of reacting the conjugated diene polymer having an active point such as an active lithium end with a coupling agent capable of reacting with the active point.

### <Coupling Agent>

In the case where the conjugated diene polymer has the active point such as the active lithium end, Mooney viscosity of the conjugated diene polymer can be regulated and a branched structure can be introduced into the polymer, by the coupling reaction.

Examples of the coupling agent include N,N-bis(trimethylsilyl)aminopropyltrichlorosilane, N,N-bis(trimethylsilyl)aminopropylmethyldichlorosilane, 1-(3-trichlorosilylpropyl)-2,2,5,5-tetramethyl-1-aza-2,5-disilacyclopentane, and 1-(3-methyldichlorosilylpropyl)-2,2,5,5-tetramethyl-1-aza-2,5-disilacyclopentane.

In addition, as the coupling agent, there may be also mentioned halogen compounds other than the above, epoxy compounds, carbonyl compounds, and polyvinyl compounds. Specifically, there may be mentioned methyldichlorosilane, methyltrichlorosilane, butyltrichlorosilane, tetrachlorosilane, dibromoethane, epoxidized soybean oil, tetraglycidyl-1,3-bisaminomethylcyclohexane, divinylbenzene, tetrachlorotin, butyltrichlorotin , tetrachlorogermanium, bis(trichlorosilyl)ethane, diethyl adipate, dimethyl adipate, dimethyl terephthalate, diethyl terephthalate, and polyisocyanates.

The coupling agents may be used singly or two or more thereof may be used in combination.

The amount of the coupling agent to be used is usually from 0.1 to 1.2 mol, and preferably from 0.5 to 1.0 mol as a reacting point of the coupling agent based on 1 mol of the active point of the polymerization end.

The coupling reaction can be performed, for example, as a solution reaction. In the coupling reaction, the reaction temperature is usually from 0 to 120°C, and preferably from 50 to 100°C and the reaction time is usually from 1 to 30 minutes, and preferably from 5 to 20 minutes.

### <<Step (1c)>> Modification Reaction

The production method of the invention may comprise a step (1c) of reacting the conjugated diene polymer having an active point such as an active lithium end with a modifier capable of reacting with the active point.

By the modification reaction, in addition to the introduction of a modifying group into the polymerization initiation end of the conjugated diene polymer by the action of the modified polymerization initiator, a modifying group is further introduced into the polymer end of the conjugated diene polymer to obtain a modified conjugated diene polymer. Thereby, an excellent hysteresis loss property can be imparted to a crosslinked body formed from a composition containing the polymer.

As the modifier, for example, a silane compound capable of reacting with the active point of the conjugated diene polymer may be mentioned and, from the standpoint of reactivity with the conjugated diene polymer having the active point, a silane compound represented by the formula (z) is preferable. 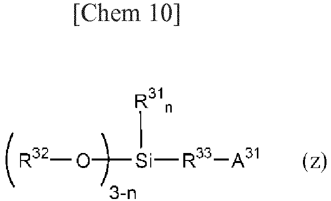 wherein, in the formula (z), R³¹'s and R³²'s are each independently a hydrocarbyl group, and preferably an alkyl group having 1 to 20 carbon atoms or an aryl group having 6 to 20 carbon atoms. R³³ is a hydrocarbylene group and preferably a methylene group, an alkylene group having 2 to 20 carbon atoms, or an arylene group having 6 to 20 carbon atoms. A plurality of R³¹'s and R³²'s, may be each the same or different. n is an integer of 0 to 2 and, from the standpoint of increasing the reactivity with the conjugated diene polymer having the active point, n is preferably 0 or 1.

A³¹ is a functional group which has at least one atom selected from a nitrogen atom N, a phosphorus atom P, and a sulfur atom S and does not have an active hydrogen and in which the atom bonded to R³³ is N, P, or S. In A³¹, a part or all of at least one atom selected from N, P, and S may be protected with a trihydrocarbylsilyl group.

A³¹ is preferably a group represented by -XRₙ (wherein X is N, P, or S; R's are each independently a trihydrocarbylsilyl group; n is 2 when X is N, is 2 when X is P, and is 1 when X is S.

In the compound (z), the "active hydrogen" means a hydrogen atom bonded to an atom other than a carbon atom and preferably means a hydrogen atom having a bond energy lower than that of the carbon-hydrogen bond of polymethylene.

Moreover, as the silane compound capable of reacting with the active point such as the active lithium end or the like of the conjugated diene polymer, in addition to the group capable of reacting with the active point, a compound having a group capable of becoming an onium by the action of an onium-forming agent can be also used. When the compound has the group capable of becoming an onium by the action of an onium-forming agent, an excellent shape-retaining property can be imparted to the polymer before crosslinking.

A³¹ in the formula (z) is a group capable of becoming an onium by the action of an onium-forming agent. By reacting the conjugated diene polymer having the active point with such a silane compound (z), the active point is reacted with a site of Si-OR³² to obtain a modified conjugated diene polymer having a group capable of becoming an onium.

Examples of the group capable of becoming an onium by the action of an onium-forming agent include nitrogen-containing groups in which two hydrogen atoms of a primary amino group are replaced with two protective groups, nitrogen-containing groups in which one hydrogen atom of a secondary amino group is replaced with one protective group, tertiary amino groups, imino groups, pyridyl groups, phosphorus-containing groups in which two hydrogen atoms of a primary phosphino group are replaced with two protective groups, phosphorus-containing groups in which one hydrogen atom of a secondary phosphino group is replaced with one protective group, tertiary phosphino groups, and sulfur-containing groups in which one hydrogen atom of a thiol is replaced by one protective groups.

Examples of a compound having a nitrogen-containing group in which two hydrogen atoms of a primary amino group are replaced with two protective groups, a nitrogen-containing group in which one hydrogen atom of a secondary amino group is replaced with one protective group, or a tertiary amino group and an alkoxysilyl group include N,N-bis(trimethylsilyl)aminopropyltrimethoxysilane, N,N-bis(trimethylsilyl)aminopropylmethyldiethoxysilane, N,N',N '-tris(trimethylsilyl)-N-(2-aminoethyl)-3-aminopropyltriethoxysilane, 1-(3-triethoxysilylpropyl)-2,2,5,5-tetramethyl-1-aza-2,5-disilacyclopentane, 1-trimethylsilyl-2,2-dimethoxy-1-aza-2-silacyclopentane, N-[3 -(trimethoxysilyl)-propyl]-N,N'-diethyl-N'-trimethylsilyl-ethane-1 ,2-diamine, N-[3-(methyldimethoxysilyl)-propyl]-N,N'-diethyl-N'-trimethylsilyl-p-phenylenediamine, 3-[3-(trimethylsilylethylamino)-1-pyrrolidinyl]-propyl-methyldiethoxysilane, N-[3-(diethoxymethylsilyl)-propyl]-N-ethyl-N '-(2-ethoxyethyl)-N'-trimethylsilyl-ethane-1,2-diamine, 3-(4-trimethylsilyl-1-piperazino) propylmethyldimethoxysilane, N-trimethylsilyl-N-methylaminopropylmethyldiethoxysilane, 3 -(4-trimethylsilyl-1-piperazino)propyltriethoxysilane, N-[2-(trimethoxysilyl)-ethyl]-N,N',N'-trimethylethane-1,2-diamine, 1-[3-(triethoxysilyl)-propyl]-4-methylpiperazine, 1-[3-(trimethoxysilyl)-propyl]-3-methylimidazolidine, 2-(3-trimethoxysilyl-propyl)-1,3-dimethylimidazolidine, 1-[3-(triethoxysilyl)-propyl]-3-methylhexahydropyrimidine, 3-[3-(tributoxysilyl)-propyl]-1-methyl-1,2,3,4-tetrahydropyrimidine, 1-(2-ethoxyethyl)-3-[3-(trimethoxysilyl)-propyl]-imidazolidine, 2-{3-[3-(trimethoxysilyl)-propyl]-tetrahydropyrimidin-1-yl}-ethyldimethylamine, 2-(trimethoxysilyl)-1,3-dimethylimidazolidine, 2-(triethoxysilyl)-1,4-diethylpiperazine, 5-(triethoxysilyl)-1,3-dipropylhexahydropyrimidine, 5-(diethoxyethylsilyl)-1,3-diethylhexahydropyrimidine, 2-[3-(2-dimethylaminoethyl)-2-(3-ethyldimethoxysilyl-propyl)-imidazolidin-1-yl]-ethyl-dimethylamine, 5-(3-trimethoxysilylpropyl)-1,3-bis-(2-methoxyethyl)-hexahydropyrimidine, 3-dimethylaminopropyltrimethoxysilane, 3-dimethylaminopropylmethyldimethoxysilane, 3-morpholinopropylmethyldimethoxysilane, 3-piperidinopropyltrimethoxysilane, 3-piperidinopropylmethyldimethoxysilane, 3-diethylaminopropyltriethoxysilane, bis[3-(triethoxysilyl)propyl]trimethylsilylamine, bis[3-(trimethoxysilyl)propyl]trimethylsilylamine, 3-(4-methyl-1-piperazino)propyl-triethoxysilane, and compounds in which the alkyl groups or alkylene groups in the above compounds are replaced with alkyl groups or alkylene groups having 1 to 6 carbon atoms.

Of these compounds, examples of preferred compounds include N,N-bis(triethylsilyl)aminopropylmethyldimethoxysilane, N,N-bis(trimethylsilyl)-aminopropylmethyldimethoxysilane, N,N-bis(trimethylsilyl)aminopropylmethyldiethoxysilane, N,N-bis(trimethylsilyl)aminopropyltriethoxysilane, 1-(3-triethoxysilylpropyl)-2,2,5,5-tetramethyl-1-aza-2,5-disilacyclopentane, N,N',N'-tris(trimethylsilyl)-N-(2-aminoethyl)-3-aminopropyltriethoxysilane, 1-trimethylsilyl-2,2-dimethoxy-1-aza-2-silacyclopentane, N-[3-(trimethoxysilyl)-propyl]-N,N'-diethyl-N'-trimethylsilyl-ethane-1,2-diamine, N-[3-(triethoxysilyl)-propyl]-N,N'-diethyl-N'-trimethylsilyl-ethane-1,2-diamine, N-trimethylsilyl-N-methylaminopropylmethyldiethoxysilane, 3-( 4-trimethylsilyl-1-piperazino)propyltriethoxysilane, N-[2-(trimethoxysilyl)-ethyl]-N,N',N'-trimethylethane-1,2-diamine, 1-[3-(triethoxysilyl)-propyl]-4-methylpiperazine, 2-(trimethoxysilyl)-1,3-dimethylimidazolidine, 2-(3-trimethoxysilyl-propyl)-1,3-dimethylimidazolidine, 3-dimethylaminopropyltrimethoxysilane, 3-diethylaminopropyltrimethoxysilane, 3-dimethylaminopropyltriethoxysilane, 3-diethylaminopropyltriethoxysilane, bis[3-(triethoxysilyl)propyl]trimethylsilylamine, bis[3-(trimethoxysilyl)propyl]trimethylsilylamine, and 3-(4-methyl-1-piperazino)propyl-triethoxysilane.

Examples of a compound having an imino group, a pyridyl group, or an imidazole group and an alkoxysilyl group include N-(1,3-dimethylbutylidene)-3-(triethoxysilyl)-1-propanamine, N-(1-methylpropylidene)-3-(triethoxysilyl)-1-propanamine, N-(4-N,N-dimethylaminobenzylidene)-3-(triethoxysilyl)-1-propanamine, N-(cyclohexylidene)-3-(triethoxysilyl)-1-propanamine, and trimethoxysilyl compounds, methyldiethoxysilyl compounds, and ethyldimethoxysilyl compounds corresponding to the triethoxysilyl compounds, N-(3-trimethoxysilylpropyl)-4,5-dihydroimidazole, N-(3-triethoxysilylpropyl)-4,5-dihydroimidazole, N-(3-trimethoxysilylpropyl)-4,5-imidazole, N-(3-triethoxysilylpropyl)-4,5-imidazole, 3-hexamethyleniminopropyltrimethoxysilane, 3-hexamethyleniminopropylmethyldimethoxysilane, and compounds in which the alkyl groups or alkylene groups in the above compounds are replaced with alkyl groups or alkylene groups having 1 to 6 carbon atoms.

Of these, examples of preferred compounds include N-(1,3-dimethylbutylidene)-3-(triethoxysilyl)-1 -propanamine, N-(1 -methylpropylidene)-3 -(triethoxysilyl)-1 - propanamine, N-(3-trimethoxysilylpropyl)-4,5-dihydroimidazole, N-(3-triethoxysilylpropyl)-4,5-dihydroimidazole, N-(3-trimethoxysilylpropyl)-4,5-imidazole, and N-(3 -triethoxysilylpropyl)-4,5 -imidazole.

Examples of a compound having a phosphorus-containing group in which two hydrogen atoms of a primary phosphino group are replaced with two protective groups, a phosphorus-containing group in which one hydrogen atom of a secondary phosphino group is replaced with one protective group, a tertiary phosphino group, or a sulfur-containing group in which one hydrogen atom of a thiol is replaced with one protective group and an alkoxysilyl group include P,P-bis(trimethylsilyl)phosphinopropylmethyldimethoxysilane, P,P-bis(trimethylsilyl)phosphinopropyltrimethoxysilane, 3-dimethylphosphinopropyltrimethoxysilane, 3-dimethylphosphinopropylmethyldimethoxysilane, 3-diphenylphosphinopropyl-trimethoxysilane, 3 -diphenylphosphinopropyltriethoxysilane, 3-diphenylphosphinopropylmetyldimethoxysilane, S-trimethylsilylmercaptopropylmethyldimethoxysilane, S-trimethylsilylmercaptopropyltrimethoxysilane, S-trimethylsilylmercaptopropyltriethoxysilane, S-trimethylsilylmercaptopropylmethyldiethoxysilane, and compounds in which the alkyl groups or alkylene groups in the above compounds are replaced with alkyl groups or alkylene groups having 1 to 6 carbon atoms.

Of these, examples of preferred compounds include 3-diphenylphosphinopropyltrimethoxysilane, 3-diphenylphosphinopropyltriethoxysilane, S-trimethylsilylmercaptopropylmethyldimethoxysilane, S-trimethylsilylmercaptopropyltrimethoxysilane, and S-trimethylsilylmercaptopropyltriethoxysilane, and S-trimethylsilylmercaptopropylmethyldiethoxysilane.

The modification reaction can be performed, for examples, as a solution reaction. The solution reaction may be performed using a solution containing an unreacted monomer after completion of the polymerization reaction or the like. Moreover, the modification reaction is preferably carried out after completion of the polymerization or the like and before performing a solvent-removing treatment, a treatment with water, a thermal treatment, and several operations necessary for isolation of the polymer. Furthermore, the modification reaction may be performed batchwise using a batch-type reaction vessel or may be performed continuously using an apparatus such as a multi-stage continuous reaction vessel.

In the modification reaction, the reaction temperature may be about the same temperature as the aforementioned polymerization temperature and is preferably from -20 to 150°C, more preferably from 0 to 120°C, and particularly preferably from 20 to 100°C. When the reaction temperature is low, there is a tendency that the viscosity of the modified conjugated diene polymer increases. When the reaction temperature is high, the active point of the modified conjugated diene polymer is prone to be deactivated. The reaction time of the modification reaction is preferably from 1 minute to 5 hours, and more preferably from 2 minutes to 1 hour.

The amount of the modifier to be used in the modification reaction is preferably 0.1 molar equivalent or more, and more preferably 0.3 molar equivalent or more relative to the active point of the conjugated diene polymer. When the amount is the above value or more, the modification reaction sufficiently proceeds, dispersibility of a reinforcing agent such as carbon black or silica is improved, and the abrasion resistance, wet skid resistance, and low hysteresis loss properties of the crosslinked body are improved. In addition, the compatibility with a polar resin tends to be improved.

The addition method of the modifier is not particularly limited and there may be mentioned a method of adding it at one time, a method of adding it portionwise, and a method of adding it continuously. Of these, the method of adding it at one time is preferable.

### <<Step (1d)>> (Polymerization Termination Reaction)

The production method of the invention may comprises a step (1d) of reacting the conjugated diene polymer having an active point such active lithium end with a polymerization terminator capable of reacting with the active point.

### <Polymerization Terminator>

In the aforementioned polymerization reaction, coupling reaction, or modification reaction, in the case where the resulting conjugated diene polymer has an active point such as active lithium end, it is possible to deactivate the active point by using a polymerization terminator.

Examples of the polymerization terminator include hydrogen; alcohols such as methanol, ethanol, propanol, isopropanol, butanol, pentanol, hexanol, heptanol, and octanol; alkyl halides such as methyl chloride, ethyl chloride, propyl chloride, butyl chloride, benzyl chloride, methyl bromide, ethyl bromide, propyl bromide, butyl bromide, methyl iodide, ethyl iodide, propyl iodide, and butyl iodide. Of these, hydrogen is preferable.

The polymerization terminators may be used singly or two or more thereof may be used in combination.

### [Step (2)1 (Hydrogenation Step)

In the step (2), the conjugated diene polymer obtained in the step (1) is hydrogenated. The method and reaction conditions of the hydrogenation are not particular limited and the hydrogenation is performed, for example, at 20 ∼ 150°C, under hydrogen pressurization of 0.1 ∼ 10 MPa in the presence of a hydrogenation catalyst.

The hydrogenation rate of the obtained hydrogenated conjugated diene polymer can be arbitrarily selected by changing the amount of the hydrogenation catalyst, the hydrogen pressure or reaction time at the time of the hydrogenation reaction, or the like. From the standpoint of improving the weather resistance, the hydrogenation rate is usually 10% or more, preferably 50% or more, more preferably 80% or more, and particularly preferably 95% or more of the aliphatic double bonds derived from the conjugated diene compound. Details of the measurement conditions of the hydrogenation rate are as described in Examples.

As described above, it is possible to obtain a polymer having excellent heat resistance and weather resistance by performing the hydrogenation reaction of the obtained conjugated diene polymer using a modified polymerization initiator.

As the hydrogenation catalyst, typically a compound containing any of 4, 5, 6, 7, 8, 9, and 10 group elements of the periodic table, for example, a compound containing Ti, V, Co, Ni, Zr, Ru, Rh, Pd, Hf, Re, or Pt element can be used.

Examples of the hydrogenation catalyst include metallocene compounds containing Ti, Zr, Hf, Co, Ni, Pd, Pt, Ru, Rh, Re, or the like; supported heterogeneous catalysts in which a metal such as Pd, Ni, Pt, Ph, or Ru is supported on a carrier such as carbon, silica, alumina, or diatomaceous earth; homogeneous Ziegler-type catalysts in which an organic salt or acetylacetone salt of Ni, Co, or the like is combined with a reducing agent such as an organoaluminum; organometallic compounds or complexes of Ru, Rh, or the like; and fullerenes and carbon nanotubes in which hydrogen is occluded.

Of these, the metallocene compounds containing any of Ti, Zr, Hf, Co, and Ni are preferable since the hydrogenation reaction can be performed in a homogeneous system in an inert organic solvent. Furthermore, the metallocene compounds containing any of Ti, Zr, and Hf are preferable. Particularly, a hydrogenation catalyst obtained by reacting a titanocene compound with an alkyllithium is preferable, since it is inexpensive and is an industrially particularly useful catalyst.

As specific examples, there may be, for example, mentioned hydrogenation catalysts described in JP-A-1-275605, JP-A-5-271326, JP-A-5-271325, JP-A-5-222115, JP-A-11-292924, JP-A-2000-37632, JP-A-59-133203, JP-A-63-5401, JP-A-62-218403, JP-A-7-90017, JP-B-43-19960, and JP-B-47-40473.

The hydrogenation catalysts may be used singly or two or more thereof may be used in combination.

### [Step (3)1 (Onium Formation Step)

The production method of the invention may comprise a step (3) of mixing and reacting the aforementioned hydrogenated modified conjugated diene polymer having a group capable of forming an onium with an onium-forming agent. By this step, an onium structure can be introduced into the hydrogenated modified conjugated diene polymer to enhance a shape-retaining property thereof. The group capable of forming an onium by the action of an onium-forming agent is a group corresponding to A³¹ in the formula (z).

Examples of the onium-forming agent include metal halides such as silicon halide compound, tin halide compounds, aluminum halide compound, titanium halide compounds, zirconium halide compounds, germanium halide compounds, gallium halide compounds, and zinc halide compounds; esters of inorganic acids such as sulfate esters, phosphate esters, carbonate esters, and nitrate esters; inorganic acids such as hydrofluoric acid, hydrochloric acid, hydrobromic acid, hydroiodic acid, sulfuric acid, nitric acid, carbonic acid, and phosphoric acid; inorganic acid salts such as potassium fluoride, tetramethylammonium fluoride, and tetra-n-butylammonium fluoride; and organic acids such as carboxylic acid (example: maleic acid), and sulfonic acid (example: benzenesulfonic acid).

Of these, from easy availability and easy handling of the compounds, preferred are silicon halide compound, tin halide compounds, aluminum halide compound, titanium halide compounds, zirconium halide compounds, germanium halide compounds, gallium halide compounds, zinc halide compounds, sulfate esters, phosphate esters, carboxylic acid, and sulfonic acid.

Specific examples of the onium-forming agent include silicon tetrachloride, tin tetrachloride, trimethylsilyl chloride, dimethyldichlorosilane, diethylaluminum chloride, zinc chloride, titanium tetrachloride, zirconium tetrachloride, germanium tetrachloride, gallium trichloride, diethyl sulfate, trimethyl phosphate, dimethyl carbonate, maleic acid, and benzenesulfonic acid.

Mixing of the hydrogenated modified conjugated diene polymer with the onium-forming agent can be, for example, performed in the form of a solution. Mixing may be conducted batchwise using a batch-type mixer or may be conducted continuously using an apparatus such as a multi-stage continuous mixer or an inline mixer.

The amount of the onium-forming agent to be added is preferably 0.5 molar equivalent or more, and more preferably 1.0 molar equivalent or more relative to the group capable of forming an onium of the hydrogenated modified conjugated diene polymer. When the amount is the above value or more, the onium formation sufficiently proceeds and, there is a tendency of improving the shape-retaining property of the hydrogenated modified conjugated diene polymer.

The addition method of the onium-forming agent is not particularly limited and there may be mentioned a method of adding it at one time, a method of adding it portionwise, and a method of adding it continuously. Of these, the method of adding it at one time is preferable.

The mixing temperature of the hydrogenated modified conjugated diene polymer with the onium-forming agents is about the same as the polymerization temperature in the aforementioned polymerization reaction and is preferably from -20 to 150°C, more preferably from 0 to 120°C, and particularly preferably from 20 to 100°C. When the temperature is low, the viscosity of the hydrogenated modified conjugated diene polymer tends to increase. When the temperature is high, the active point such as the active lithium end is prone to deteriorate.

The formation of the onium structure in the hydrogenated modified conjugated diene polymer is conducted in the presence of water. As methods for forming the onium structure, there may be, for example, mentioned (i) a method of adding water directly to a solution of the hydrogenated modified conjugated diene polymer and mixing them, (ii) a method of adding one obtained by dissolving water in an organic solvent such as an alcohol capable of dissolving in both of water and an organic solvent, into a solution of the hydrogenated modified conjugated diene polymer and mixing them, and (iii) a mixing a solution of the hydrogenated modified conjugated diene polymer with water simultaneously with solvent removal by steam stripping in the recovery step.

In this case, the polymer solution obtained in the preparation of the hydrogenated modified conjugated diene polymer may be used in the form of the polymer solution without solvent removal or the polymer solution may be subjected to solvent removal by steam stripping or the like and further dried and the resulting hydrogenated modified conjugated diene polymer may be used after dissolving again in an organic solvent such as cyclohexane.

### [Step (4)] (Recovery Step)

The conjugated diene polymer can be recovered from the solution containing the hydrogenated conjugated diene polymer obtained as described above, for example, by a solvent-removing method known in the production of the conjugated diene polymer and drying operations. As the known solvent-removing methods, a steam stripping method, a drum dryer method, and an instantaneous evaporation (flash) solvent-removing method may be mentioned.

It is possible to adjust the Mooney viscosity by adding extender oil to the hydrogenated conjugated diene polymer according to need to improve the workability. Examples of the extender oil include aroma oil, naphthene oil, and paraffin oil. The amount of the extender oil is, for example, usually from 10 to 50 parts by mass based on 100 parts by mass of the hydrogenated conjugated diene polymer.

### [Hydrogenated Conjugated Diene Polymer]

The hydrogenated conjugated diene polymer of the invention has at least one structure of the formulae (X) and (Y) at the polymer end. Also, the hydrogenated conjugated diene polymer of the invention may have a structure represented by the formula (Z).

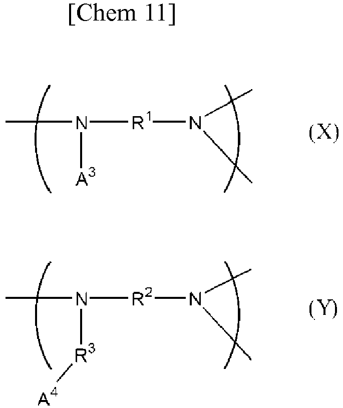

In the formula (X), R¹ is a hydrocarbylene group, and the hydrocarbylene group in R¹ may contain a heteroatom as long as the hydrocarbylene group does not have an active hydrogen atom, and A³ is a hydrogen atom or a trihydrocarbylsilyl group. In the formula (Y), R² and R³ are each independently a hydrocarbylene group, the hydrocarbylene group in each of R² and R³ may contain a heteroatom as long as the hydrocarbylene group does not have an active hydrogen atom; and A⁴ is a functional group which has at least one atom selected from a nitrogen atom N, a phosphorus atom P, and a sulfur atom S and in which all or a part of the atoms may be protected with a trihydrocarbylsilyl group and the atom that is bonded to R³ is N, P or S.

The above R¹ and A ³ may be bonded to each other to form a cyclic structure. That is, an atom in R¹ and an atom in A³ may be bonded to form a cyclic structure. A part of the above R², R³, and A⁴ may be bonded to each other to form a cyclic structure. That is, an atom in R² and an atom in R³ may be bonded to form a cyclic structure, an atom in R² and an atom in A⁴ may be bonded to form a cyclic structure, or an atom in R³ and an atom in A⁴ may be bonded to form a cyclic structure.

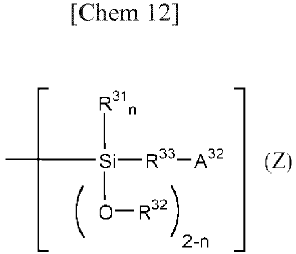

In the formula (Z), R³¹'s are each independently a hydrocarbyl group. R³²'s are each independently a hydrogen atom or a hydrocarbyl group. R³³ is a hydrocarbylene group. A³² is a functional group which has at least one atom selected from a nitrogen atom N, a phosphorus atom P, and a sulfur atom S and in which a part or all of the atoms may be protected with a trihydrocarbylsilyl group and the atom that is bonded to R³³ is N, P or S. A³² may be a group resulting from onium formation of A³¹ in the formula (z). n is an integer of 0 to 2. A plurality of R³¹'s and R³²'s may be each the same or different.

As the hydrogenated conjugated diene polymer having a structure represented by the formula (X), there may be, for example, mentioned a hydrogenated conjugated diene polymer having at least one group selected from a group represented by the formula (X1) and a group represented by the formula (X2) at the polymer end. 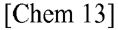 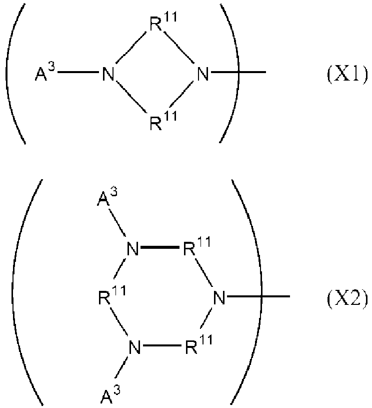 In the formulae (X1) and (X2), R¹¹'s are each independently a hydrocarbylene group, and the hydrocarbylene group in R¹¹ may contain a heteroatom as long as the hydrocarbylene group does not have an active hydrogen atom; A³'s are each independently a hydrogen atom or a trihydrocarbylsilyl group. A plurality of R¹¹'s and A³'s may be each the same or different.

The above R¹¹ and A³ may be bonded to each other to form a cyclic structure. That is, an atom in R¹¹ and an atom in A³ may be bonded to form a cyclic structure.

As the hydrogenated conjugated diene polymer having a structure represented by the formula (Y), there may be, for example, mentioned a hydrogenated modified conjugated diene polymer having at least one group selected from a group represented by the formula (Y1) and a group represented by the formula (Y2) at the polymer end. 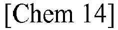 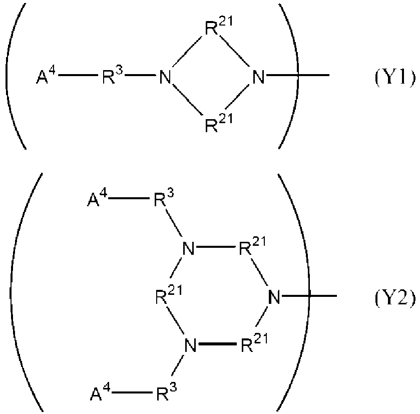 In the formulae (Y1) and (Y2), R²¹'s and R³'s are each independently a hydrocarbylene group, and the hydrocarbylene group in each of R²¹ and R³ may contain a heteroatom as long as the hydrocarbylene group does not have an active hydrogen atom; A⁴ is a functional group which has at least one atom selected from a nitrogen atom N, a phosphorus atom P, and a sulfur atom S and in which all or a part of the atoms may be protected with a trihydrocarbylsilyl group and the atom that is bonded to R³ is N, P or S. A plurality of R²¹'s, R³'s, and A⁴'s may be each the same or different.

A part of the above R²¹, R³, and A⁴ may be bonded to each other to form a cyclic structure. That is, an atom in R²¹ and an atom in R³ may be bonded to form a cyclic structure, an atom in R²¹ and an atom in A⁴ may be bonded to form a cyclic structure, or an atom in R³ and an atom in A⁴ may be bonded to form a cyclic structure.

The conjugated diene polymer of the invention may be a homopolymer composed of a conjugated diene compound, may be a random copolymer composed of a conjugated diene compound and another monomer such as an aromatic vinyl compound, or may be a block copolymer composed of conjugated diene compounds or a conjugated diene compound and anther monomer such as an aromatic vinyl compound.

The hydrogenated conjugated diene polymer having the above configuration can be synthesized, for example, by the aforementioned production method of the invention. Specific examples and preferable examples of each group in the above formulae are the same as described in the paragraphs of the production method of the invention.

The molecular weight of the hydrogenated conjugated diene polymer of the invention is usually from 30,000 to 2,000,000, preferably from 40,000 to 1,000,000, and more preferably 50,000 to be 500,000 as the weight-average molecular weight in terms of polystyrene in gel permeation chromatography (GPC) method. Details of the measurement conditions of the weight average molecular weight are as described in Examples.

The hydrogenation rate of the hydrogenated conjugated diene polymer of the invention is usually 10% or more, preferably 50% or more, more preferably 80% or more, particularly preferably 90% or more, and most preferably at least 95% of the aliphatic double bond derived from the conjugated diene compound, since the weather resistance is improved. Details of the measurement conditions of the hydrogenation rate are as described in Examples.

In the following, the aforementioned hydrogenated conjugated diene polymer of the invention and the hydrogenated conjugated diene polymer obtained by the production method of the invention are also collectively referred to as "hydrogenated conjugated diene polymer of the invention".

The hydrogenated conjugated diene polymer of the invention has an N atom that becomes an interaction point for increasing dispersibility of fillers such as carbon black and silica or a reaction point for working as a compatibilizer for various polymers at the polymerization initiation end. Therefore, the polymer can increase the dispersibility of fillers such as carbon black and silica and is excellent in processability at the time of compounding with a thermoplastic resin or the like, so that a polymer alloy having excellent physical properties can be formed after compounding.

In one embodiment, the N atom may be protected with a trihydrocarbylsilyl group and, depending on the objective physical properties, it is possible to convert it into an active amino group through deprotection by hydrolysis.

### [First Polymer Composition and Crosslinked Body Thereof]

The first polymer composition of the invention contains the hydrogenated conjugated diene polymer of the invention and may further contain a polymer component other than the polymer (hereinafter also referred to as "other polymer component"). Furthermore, the first polymer composition of the invention may contain at least one selected from carbon black and silica.

### <Hydrogenated Conjugated Diene Polymer>

In the first polymer composition of the invention, the hydrogenated conjugated diene polymer of the invention may be incorporated without any particular limitation but, from the standpoint of the balance among the wet skid resistance, the low hysteresis loss properties, and the abrasion resistance, the aforementioned conjugated diene homopolymer and random copolymer are preferable.

In the first polymer composition of the invention, the content of the hydrogenated conjugated diene polymer of the invention is preferably 30% by mass or more, more preferably from 50 to 100% by mass, and particularly preferably from 70 to 100% by mass based on the total amount of the polymer components. When the content lies within the above range, the mechanical properties such as tensile strength and tensile elongation, crack growth resistance, and abrasion resistance of the crosslinked body can be made more satisfactory.

### <Other Polymer Components>

Examples of other polymer components include natural rubber, synthetic isoprene rubber, butadiene rubber, modified butadiene rubber, styrene-butadiene rubber, modified styrene-butadiene rubber, ethylene-α-olefin copolymer rubber, ethylene-olefin-α-diene copolymer rubber, acrylonitrile-butadiene copolymer rubber, chloroprene rubber, halogenated butyl rubber, styrene-isoprene copolymer rubber, butadiene-isoprene copolymer rubber, random styrene-butadiene-isoprene copolymer rubber, styreneacrylonitrile-butadiene copolymer rubber, acrylonitrile-butadiene copolymer rubber, and polystyrene-polybutadiene-polystyrene block copolymer.

The other polymer components may be used singly or two or more thereof may be used in combination.

### <Carbon Black, Silica>

Examples of carbon black include various grades of carbon black, such as furnace black typified by SRF, GPF, FEF, HAF, ISAF, SAF, ISAF-HS, ISAF-LS, IISAF-HS, HAF-HS, and HAF-LS, acetylene black, thermal black, channel black, graphite, furthermore, graphite fibers, and fullerenes. Moreover, carbon black having an iodine adsorption amount (IA) of 60 mg/g or more and a dibutyl phthalate absorption amount (DBP) of 80 ml/100g or more is preferable. By using carbon black, the effect of improving grip performance and fracture resistance of the crosslinked body is increased. From the standpoint of improving the abrasion resistance of the crosslinked body, SRF, HAF, ISAF, and SAF are particularly preferable.

Carbon black may be used singly or two or more thereof may be used in combination.

Examples of silica include wet silica (hydrous silicic acid), dry silica (anhydrous silicic acid), colloidal silica, precipitated silica, calcium silicate, and aluminum silicate. Of these, wet silica is preferable, which shows most remarkably the effect of improving the fracture resistance and the effect of achieving both of wet grip performance and low rolling resistance. Moreover, it is also preferable to use high dispersible type (High Dispersible Type) silica from the standpoints of increasing the dispersibility into the polymer composition and improving the physical properties and the processability.

Silica may be used singly or two or more thereof may be used in combination.

In the first polymer composition of the invention, the content of carbon black and/or silica (total amount of them in the case of containing both) is preferably from 20 to 130 parts by mass, and more preferably from 25 to 110 parts by mass based on 100 parts by mass of the polymer components (total of the hydrogenated conjugated diene polymer and the other polymers) from the standpoint of the effect of improving reinforcing properties and various physical properties thereby. The content of carbon black and/or silica is preferably the lower limit value or more from the standpoint of obtaining the effect of improving the fracture resistance and the like, and is preferably the upper limit value or less from the standpoint of maintaining the processability of the polymer composition.

Moreover, by blending a carbon-silica dual phase filler (Dual Phase Filler) into the first polymer composition of the invention, it is possible to obtain the same advantages as in the case where carbon black and silica are used in combination. The carbon-silica dual phase filler is so-called silica-coating-carbon black in which silica is chemically bonded to the surface of carbon black, and is sold under the trade name of CRX2000, CRX2002, or CRX2006 from Cabot Corporation. The content of the carbon-silica dual phase filler is preferably from 1 to 100 parts by mass, and more preferably from 5 to 95 parts by mass based on 100 parts by mass of the polymer components (total of the hydrogenated conjugated diene polymer and the other polymer components).

### <Silane Coupling Agent>

In the case where silica is blended as a reinforcing agent to the first polymer composition of the invention, in order to further improve the reinforcing effect, it is preferable to blend a silane coupling agent. Examples of the silane coupling agent include bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3 -mercaptopropyltriethoxysilane, 2-mercaptoethyltrimethoxysilane, 2-mercaptoethyltriethoxysilane, 3 -trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzolyl tetrasulfide, 3-triethoxysilylpropyl methacrylate monosulfide, 3-trimethoxysilylpropyl methacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide, dimethoxymethylsilylpropylbenzothiazolyl tetrasulfide, 3-methacryloxypropyltrimethoxysilane, and mercapto silane compounds exemplified in JP-A-2006-249069.

Examples of commercially available products include trade names "NXT silane", "NXT Z silane", "NXT-Low-V silane", and "NXT Ultra Low-V silane" manufactured by Momentive performance Materials Co., Ltd., trade name "VP Si363" manufactured by Degussa Corporation, trade name "11-MERCAPTOUNDECYLTRIMETHOXYSILANE" manufactured by gelest Co., trade name "Si75" manufactured by Evonik Degussa Japan Co., Ltd., and trade name "TSL8370" manufactured by GE Toshiba Silicone Co., Ltd.

Of the silane coupling agents, from the standpoint of the effect of improving reinforcing properties and the like, bis(3-triethoxysilylpropyl) disulfide, 3-trimethoxysilylpropylbenzothiazyl tetrasulfide, 3 -methacryloxypropyltrimethoxysilane, and mercaptosilane compounds exemplified in JP-A- 2006-249069 are suitable.

The silane coupling agents may be used singly or two or more thereof may be used in combination.

In the first polymer composition of the invention, the content of the silane coupling agent is preferably from 1 to 20 parts by mass, and more preferably from 3 to 15 parts by mass based on 100 parts by mass of silica. When the content is less than the above value, there is a tendency that the effect as the coupling agent is less prone to be sufficiently exhibited. When the content exceeds the above value, there is a tendency that the polymer components are prone to be gelled.

### <Compatibilizer>

Upon preparation of the first polymer composition of the invention, for the purpose of improving the workability at the time of kneading or further improving the balance among the wet skid resistance, the low hysteresis loss properties, and the abrasion resistance, a compatibilizer can be added at the time of kneading.

Preferable examples of the compatibilizer include organic compounds selected from epoxy group-containing compounds, carboxylic acid compounds, carboxylate ester compounds, ketone compounds, ether compounds, aldehyde compounds, hydroxyl group-containing compounds, and amino group-containing compound; silicone compounds selected from alkoxysilane compounds, siloxane compounds, and aminosilane compounds.

Examples of the organic compound that is a compatibilizer include the following compounds.
* Epoxy group-containing compounds: ethylene glycidyl methacrylate, butyl glycidyl ether, diglycidyl ether, propylene oxide, neopentyl glycol diglycidyl ether, epoxy resins, epoxidized soybean oil, epoxidized fatty acid esters, and the like.
* Carboxylic acid compounds: adipic acid, octylic acid, methacrylic acid, and the like.
* Carboxylate ester compounds: acrylate esters, diethylene acrylate, ethyl methacrylate, orthoacetate esters, ethyl acetoacetate, butyl acetate, isopropyl acetate, dimethyl carbonate, p-hydroxyphenyl acetate, polyester-based plasticizers, stearic acid-based plasticizers, and the like.
* Ketone compounds: methylcyclohexanone, acetylacetone, and the like.
* Ether compounds: isopropyl ether, dibutyl ether, and the like.
* Aldehyde compounds: undecylenic aldehyde, decyl aldehyde, vanillin, 3,4-dimethoxybenzaldehyde, cuminaldehyde, and the like.
* Amino group-containing compounds: isopropylamine, diisopropylamine, triethylamine, 3-ethoxypropylamine, 2-ethylhexylamine, isopropanolamine, N-ethylethylenediamine, ethyleneimine, hexamethylenediamine, 3-lauryloxypropylamine, aminophenol, aniline, 3-isopropoxyaniline, phenylenediamine, aminopyridine, N-methyldiethanolamine, N-methylethanolamine, 3-amino-1-propanol, ethylamine hydrochloride, n-butylamine hydrochloride, and the like.
* Hydroxyl group-containing compounds: isopropyl alcohol, butanol, octanol, octanediol, ethylene glycol, methylcyclohexanol, 2-mercaptoethanol, 3-methyl-3-methoxy-1-butanol, 3-methyl-1,5-pentanediol, 1-octadecanol, diethylene glycol, butylene glycol, dibutylene glycol, triethylene glycol, and the like.

Examples of the silicone compound that is a compatibilizer include the following compounds.
* Alkoxysilane compounds: trimethylmethoxysilane, trimethylethoxysilane, dimethyldimethoxysilane, methyltriethoxysilane, methyltriphenoxysilane, tetraethoxysilane, methyldiethoxysilane, vinyltrimethoxysilane, and the like.
* Siloxane compounds: dimethylsiloxane oligomers, silicone oil, amino-modified silicone oil, epoxy-modified silicone oil, carboxyl-modified silicone oil, polyether-modified silicone oil, alkyl-modified silicone oil, higher fatty acid ester-modified silicone oil, higher alkoxy-modified silicone oil, higher fatty acid-containing silicone oil, and the like.
* Aminosilane compounds: hexamethyldisilazane, nonamethyltrisilazane, Anilitrimethylsilane, bis(dimethylamino)dimethylsilane, bis(diethylamino)dimethylsilane, triethylaminosilane, and the like.

Of the organic compounds, the epoxy-containing compounds, the amino group-containing compound, and hydroxyl group-containing compounds are preferable; and, of the silicone compounds, silazane compounds and bis(dimethylamino)dimethylsilane are preferable.

In the first polymer composition of the invention, the content of the compatibilizer is preferably from 0.1 to 20 parts by mass, and more preferably from 0.5 to 10 parts by mass based on 100 parts by mass of silica. When the content lies within the above range, the balance among the wet skid resistance, the low hysteresis loss properties, and the abrasion resistance tend to be improved.

### <Various Additives>

The first polymer composition of the invention can optionally contain various chemicals, additives, and the like which are usually used in the rubber industry. Examples of the chemicals or additives include crosslinking agents (examples: vulcanizing agents), crosslinking aids (examples: vulcanizing aids), processing aids, crosslinking accelerators, process oils, antioxidants, scorch-preventing agents, and zinc white.

Examples of the crosslinking agents include sulfur, sulfur halides, organic peroxides, quinone dioximes, organic polyvalent amine compounds, and alkylphenol resins having a methylol group. Of these, sulfur is preferable. The amount of sulfur is preferably from 0.1 to 5 parts by mass, and more preferably from 0.2 to 3 parts by mass based on 100 parts by mass of the polymer components (total of the hydrogenated conjugated diene polymer and the other polymer components).

As the vulcanizing aid and processing aid, stearic acid is preferable. The content of the vulcanizing aid and processing aid is usually from 0.5 to 5 parts by mass based on 100 parts by mass of the polymer components (total of the hydrogenated conjugated diene polymer and the other polymer components).

Examples of the crosslinking accelerator include sulfenamide-based, guanidine-based, thiuram-based, thiourea-based, thiazole-based, dithiocarbamate-based, and xanthate-based compounds and preferably include 2-mercaptobenzothiazole, dibenzothiazyl disulfide, N-cyclohexyl-2-benzothiazylsulfenamide, N-t-butyl-2-benzothiazolesulfenamide, N-oxyethylene-2-benzothiazolesulfenamide, N-oxyethylene-2-benzothiazolesulfenamide, N,N'-diisopropyl-2-benzothiazolesulfenamide, diphenylguanidine, di-o-tolylguanidine, and o-tolylbisguanidine. The amount of the crosslinking accelerator is preferably from 0.1 to 5 parts by mass, and more preferably from 0.4 to 4 parts by mass based on 100 parts by mass of the polymer components (total of the hydrogenated conjugated diene polymer and the other polymer components).

### <Method for Preparing Polymer Composition>

The first polymer composition of the invention can be produced by kneading the components using a kneader such as an open kneader (example: roll) or a closed type kneader (example: Banbury mixer).

### <Crosslinked Body Formed from First Polymer Composition>

The first polymer composition of the invention can be applied to various rubber products as a crosslinked body by cross-linking (vulcanization) after molding. Examples of the uses of the crosslinked body include tire uses such as tire tread, under tread, carcass, sidewall, and bead part; uses such as anti-vibration rubber, fender, belt, hose, and other industrial products. The crosslinked body of the invention is, in particular, suitably used as a rubber for tire tread from the standpoint of providing low fuel-consumption performance.

### [Second Polymer Composition and Molded Body Thereof]

The second polymer composition of the invention contains the hydrogenated conjugated diene polymer of the invention (hereinafter also referred to as "component (I)") and at least one polymer selected from a non-polar polymer (hereinafter also referred to as "component (II-1)") other than the component (I) and a polar polymer (hereinafter also referred to as "component (II-2)").

The hydrogenated conjugated diene polymer of the invention is excellent in the effect of polar polymer modification and also excellent in the effect of compatibilizing a conventional heterogeneous polymer mixture. Therefore, by using the above polymer as a contained component of the polymer composition containing another polymer, it is possible to give a molded body excellent in the balance among processability, heat resistance, rigidity, impact resistance, surface impact resistance, tensile elongation at break, specularity, and delamination properties or the like.

The non-polar polymer and the polar polymer may be either a resin or a rubber.

### <Component (I)>

In the second polymer composition of the invention, the hydrogenated conjugated diene polymer of the invention may be incorporated without any particular limitation but, from the standpoint of improving the compatibility with polar resins, the aforementioned conjugated diene block copolymer is preferable.

### <Component (II-1)>

As the component (II-1), an olefin polymer and an aromatic vinyl polymer are preferable.

Examples of the olefin polymer include polyethylene resins such as very low density polyethylene (VLDPE), linear low density polyethylene (LLDPE), low density polyethylene (LDPE), medium density polyethylene (MDPE), and high density polyethylene (HDPE); polypropylene resins (PP) such as random type, block type, or homo type ones; copolymers of ethylene and an α-olefin having 3 to 20 carbon atoms, such as ethylene-propylene copolymer (EPM), ethylene-1-butene copolymer (EBM), ethylene-hexene copolymer (EHM), and ethylene-octene copolymer (EOM); copolymers of propylene and an α-olefin having 4 to 20 carbon atoms, such as propylene-1-butene copolymer (PBM); ethylene-based ternary copolymers such as ethylene-propylene-1-butene copolymer (EPBM), ethylene-propylene-diene copolymer (EPDM), and ethylene-1-butene-diene copolymer (EBDM); poly-1-butene (PB), polymethylpentene (PMP), and polybutadiene (PBD). These may be used singly or two or more thereof may be used in combination.

Examples of the aromatic vinyl polymer include polystyrene-based resins such as general-purpose polystyrene (GPPS), high impact polystyrene (HIPS), isotactic polystyrene (iPS), syndiotactic polystyrene (sPS), and poly α-methyl styrene (PaMS). These may be used singly or two or more thereof may be used in combination.

### <Component (II-2)>

As the component (II-2), for example, preferred is a polymer having at least one functional group selected from a carboxyl group (including the carboxyl group which constitutes an acid anhydride or a metal salt), a hydroxyl group, a halogen group, an epoxy group, an oxazoline group, a sulfonic acid group, an isocyanate group, a thiol group, an ester bond, a carbonate bond, an amide bond, an ether bond, a urethane, and a urea bond.

Examples of the polymer having the functional group include:
carboxyl group-containing polymers such as ethylene-acrylic acid copolymer (EAA), ethylene-methacrylic acid copolymer (EMA), ethylene-maleic anhydride-(meth)acrylic acid copolymer, ethylene-ethyl (meth)acrylate-maleic anhydride copolymer, an ionomer (IO) that is a copolymer of ethylene and (meth)acrylic acid in which the content of structural units derived from (meth)acrylic acid is from 7 to 15 mol% and the degree of neutralization with a metal ion such as Na, Zn, or Mg is 20% or more;
polyester resins such as polyethylene terephthalate (PET), polybutylene terephthalate (PBT), polyethylene naphthalate (PEN), polylactic acid (PLA), polyhydroxyalkanoic acids (PHA), polylactone, polycaprolactone, polyethylene succinate, polybutylene succinate, polyethylene adipate, and polybutylene succinate adipate;
polyamide resins (PA) such as nylon 4,6 (PA46), nylon 6 (PA6), nylon 6,6 (PA66), nylon 6,10 (PA610), nylon 6,12 (PA612), nylon 12 (PA12), nylon 6,T (PA6T), nylon 9,T (PA9T), reinforced polyamides, and modified polyamides made from hexamethylenediamine and terephthalic acid;
acrylic polymers such as ethylene-methyl acrylate copolymer (EMA), ethylene-ethyl acrylate copolymer (EEA), ethylene-isopropyl acrylate copolymer, ethylene-2-ethylhexyl acrylate copolymer, ethylene-methyl methacrylate copolymer, ethylene-ethyl methacrylate copolymer, ethylene-isobutyl methacrylate copolymer, ethylene-butyl methacrylate copolymer, ethylene-hydroxyethyl methacrylate copolymer (HEMA), ethylene-2-hydroxypropyl methacrylate copolymers, ethylene-aminoalkyl methacrylate copolymer, ethylene-glycidyl methacrylate copolymer (EGMA), polymethyl methacrylate (PMMA), polyethyl methacrylate (PEMA), and methacrylic-styrene copolymer (MS Resin);
polycarbonates (PC) such as poly-2,2-bis(hydroxyphenyl)propane carbonate; polyphenylene ethers (PPE) such as poly(2,6-dimethyl-1,4-phenylene ether), poly(2-methyl-6-ethyl-1,4-phenylene ether), poly(2-methyl-6-phenyl-1,4-phenylene ether), poly(2,6-dichloro-1,4-phenylene ether), and modified polyphenylene ether (modified PPE); polyvinyl acetate (PVAc), liquid crystalline polyester (LCP), polyacetal (POM), ABS resin, AES resin, ASA resin, EVA resin, ethylene-vinyl propionate copolymer, diallylphthalate resin (DAP), phenol resin (PF), polyvinyl alcohol (PVA), ethylene-vinyl alcohol copolymer (EVOH), polyarylate (PAR), norbornene resin, polyethylene oxide, polyphenylene sulfide (PPS), polysulfone (PSU), and polyethersulfone (PES);
thermoplastic polyester elastomers, thermoplastic polyurethane elastomers, thermoplastic polyamide elastomers, α,β-unsaturated nitrile-acrylic ester-unsaturated diene copolymer rubber, urethane rubber, chlorinated butyl rubber, brominated butyl rubber, acrylic rubber, ethylene-acrylic rubber, epichlorohydrin rubber, epichlorohydrin-ethylene oxide rubber, and chloroprene rubber; and
chlorosulfonated polyethylene, chlorinated polyethylene, chlorinated polypropylene, oxazoline-modified polystyrene, and oxazoline-modified styreneacrylonitrile copolymer.

These may be used singly or two or more thereof may be used in combination.

Of the polymers exemplified as the component (II-1) and the component (II-2), due to the molecular chain structure of the component (I), a polyethylene resin having a structural unit derived from ethylene, a polypropylene resin having a structural unit derived from propylene, a polystyrene-based resin having a structural unit derived from an aromatic vinyl compound, a polyester resin such as polylactic acid or polyethylene terephthalate, a polyamide resin, an acrylic polymer, an ethylene-vinyl alcohol copolymer are particularly preferable since they are excellent in the effect of improving physical properties and use applications can be extended.

The polymers exemplified as the component (II-1) and the component (II-2) may be synthetic resins using a biomass-derived monomer.

In the case where the second polymer composition of the invention contains the component (I) and the component (II-1) or contains the component (I) and the component (II-2), the content ratio may be as follows in both cases. That is, when the component (II-1) and the component (II-2) are referred to as "component (II)", the component (I)/component (II) (mass ratio) is preferably 1 to 99/99 to 1, more preferably 5 to 95/95 to 5, and further preferably 10 to 90/90 to 10.

In the case where the second polymer composition of the invention contains the component (I), the component (II-1), and the component (II-2), the content ratio may be as follows. That is, the component (II-1)/the component (II-2) (mass ratio) is preferably 1 to 99/99 to 1, more preferably 5 to 95/95 to 5, and further preferably 10 to 90/90 to 10, and the content of the component (I) is preferably from 1 to 100 parts by mass, more preferably from 5 to 50 parts by mass, and further preferably from 10 to 40 parts by mass when the total content of the component (II-1) and the component (II-2) is regarded as 100 parts by mass.

### <Component (III)>

The second polymer composition of the invention may contain a filler (hereinafter also referred to as "component (III)") . Examples of the component (III) include magnesium hydroxide, aluminum hydroxide, zirconium hydroxide, calcium hydroxide, barium hydroxide, basic magnesium carbonate, dolomite, hydrotalcite, tin oxide, titanium oxide, zinc oxide, iron oxide, magnesium oxide, alumina, barium sulfate, calcium sulfate, sodium sulfate, calcium sulfite, calcium silicate, calcium carbonate, magnesium carbonate, phosphate salt compound, carbon, glass beads, glass powder, asbestos, mica, talc, silica, zeolite, kaolin, silica sand, silica rock, quartz powder, Shirasu, inorganic fibers such as carbon fibers and metal fibers, and inorganic whiskers such as potassium titanate whiskers. These may be used singly or two or more thereof may be used in combination.

The component (III) may be used without further treatment but, for the purpose of increasing the affinity with various polymers and the interfacial bonding strength or the like, there can be also used one subjected to a surface treatment with a fatty acid (examples: stearic acid, oleic acid, or palmitic acid) or a metal salt thereof, paraffin, wax, polyethylene wax or a modified product thereof, an organic borane, an organic titanate, a silane coupling agent, an aluminum coupling agent, or the like.

Of these, examples of one used as a flame retardant include magnesium hydroxide, aluminum hydroxide, zirconium hydroxide, calcium hydroxide, barium hydroxide, basic magnesium carbonate, dolomite, hydrotalcite, and tin oxide. Of these, magnesium hydroxide, aluminum hydroxide, and calcium hydroxide are preferable since they are useful and also industrially easily available. Magnesium hydroxide is particularly preferable owing to a high flame retardant effect.

In the case of using a flame retardant, in order to enhance the flame retardant effect, a phosphorus-based flame retardant such as a red phosphorus-based flame retardant, an ammonium polyphosphate-based flame retardant, or a phosphate ester, a silicone compound, quartz glass, or the like and, as a flame retardant aid, water glass, a frit, a silicon nitride short fiber for drip prevention, or the like can also be used in combination.

The content of the component (III) is, when the total of the polymer components such as the component (I) and the component (II) is regarded as 100 parts by mass, preferably from 1 to 90 parts by mass, and more preferably from 2 to 80 parts by mass. When the content of the component (III) lies within the above range, the properties such as flame retardancy and strength can be imparted without inhibiting the effects of the component (I), the component (II-1), and component (II-2).

### <Other Components>

The second polymer composition of the invention may be blended with, in addition to the above components, as other additives, a stabilizer such as an antiaging agent, a weathering agent, a metal deactivator, a light stabilizer, a UV absorber, and a heat stabilizer, an antibacterial/antifungal agent, a dispersing agent, a softener, a plasticizer, a crosslinking agent, a co-crosslinking agent, a vulcanizing agent, a vulcanizing aid, a foaming agent, a foaming aid, a colorant, a metal powder of ferrite or the like, an organic fiber such as an aramid fiber, and/or a composite fiber. Also, graphite, pumice, ebonite powder, cotton flock, cork powder, a fluororesin, polymer beads, polyolefin wax, cellulose powder, rubber powder, and a low-molecular-weight polymer may be blended. When crosslinking is performed, the method is not particularly limited and there may be mentioned sulfur crosslinking, peroxide crosslinking, electron beam crosslinking, ultraviolet crosslinking, radiation crosslinking, metal ion crosslinking, silane crosslinking, resin crosslinking, and the like. Incidentally, the foaming agent will be collectively described at the time of explaining foam molding.

### <Preparation of Second Polymer Composition>

For the preparation of the second polymer composition of the invention, it is possible to use a conventionally known kneader such as an extruder, a pressure kneader, an open kneader (example: roll), or a closed type kneader (example: Banbury mixer) or a kneader in which they are combined. Upon kneading, the ingredients may be collectively kneaded or it is possible to adopt a multistage divisional kneading method in which arbitrary components are kneaded and subsequently remaining components are added and kneaded.

Also, for the preparation of the second polymer composition of the invention, a twin-screw extruder is particularly preferable and it is possible to use suitably either a corotating type or a counter-rotating type. L/D (the ratio of the effective length (L) of the screw and the diameter (D) of the screw of the extruder) is preferably from 30 to 80 and, as the kneading segments, general use kneading discs, rotors, VCMT (trademark: Kobe Steel, Ltd.), Twist Kneading (trademark: Japan Steel Works, Ltd.), BMS (trademark: Japan Steel Works, Ltd.) screws, and the like can be used. Kneading conditions are not particularly limited and, for example, kneading temperature is from 150 to 290°C, the shear rate is from 100/s to 10000/s, the specific energy obtained by dividing the power consumption of motor of the kneader per unit time by a kneaded amount per unit time is from 0.1 to 6kW·H/kg. Moreover, extruders may be used with the connection of a twin-screw and a twin-screw, the connection of a twin-screw and a single-screw, or the connection of a continuous kneader and a twin-screw. As manufacturers of the above extruders, Japan Steel Works, Ltd., Kobe Steel, Ltd., Werner, Ikegai Corporation, Toshiba Machine co., Ltd., and the like may be mentioned.

The thus obtained polymer composition can be molded by a known method such as injection molding, two-color injection molding, extrusion molding, rotational molding, press molding, hollow molding, sandwich molding, compression molding, vacuum forming, powder slush molding, laminate molding, calender molding, or blow molding. If necessary, processing such as foaming, drawing, adhesion, printing, painting, or plating may be performed.

Since the second polymer composition of the invention has the above configuration, it is possible to give a molded body excellent in the balance among heat resistance, rigidity, impact resistance, surface impact resistance, tensile elongation at break, specularity, and delamination properties by using the composition.

Examples of the molded body composed of the second polymer composition include food packaging containers, various trays, sheets, tubes, films, fibers, laminates, coatings, electric and electronic components of printed circuit boards, OA devices such as computers, housings of home appliances, automobile interior and exterior materials, outer plate parts, precision parts, and various industrial parts such as building materials. Moreover, in these utilization fields, as described below, the second polymer composition of the invention can be preferably used even after foaming.

The second polymer composition of the invention may be foam-molded using a foaming agent. The method for foaming is not particularly limited and may be any method of a batch method or a continuous method. Specifically, the composition can be foamed by a molding method such as extrusion molding, injection molding, or press molding.

As the foaming agent, for example, a chemical foaming agents or a physical foaming agent can be used. The foaming agent may be selected depending on the production method. The foaming agent may be used singly or two or more thereof may be used in combination.

### <Chemical Foaming Agent>

As the chemical foaming agent, for example, a thermal decomposition type foaming agent and a hollow particle type foaming body may be mentioned.

The thermal decomposition type foaming agent includes nitroso-based foaming agents such as N,N'-dinitrosopentamethylenetetramine and N,N'-dimethyl-N,N'-dinitrosoterephthalamide; azo-based foaming agents such as azodicarbonamide, barium azodicarboxylate, and barium azodicarboxylate; sulfohydrazide-based foaming agents such as p,p-oxybisbenzenesulfonyl hydrazide, 4,4'-oxybis(benzenesulfonyl hydrazide), and p-toluenesulfonyl semicarbazide; triazine-based foaming agents such as trihydrazinotriazine; tetrazole-based foaming agents such as 5-phenyltetrazole, azobistetrazolediguanidine, and azobistetrazoleaminoguanidine; inorganic foaming agents such as sodium hydrogen carbonate. The thermal decomposition type foaming agent may be used singly or two or more thereof may be used in combination.

The amount of the thermal decomposition type foaming agent to be added is not particularly limited but is, for example, from 0.1 to 100 parts by mass based on 100 parts by mass of the polymer composition excluding the thermal decomposition type foaming agent.

The hollow particle type foaming agent is a heat-expandable microsphere encapsulating an expanding agent and having a thermoplastic resin as a shell component. As the expanding agent constituting the hollow particle type foaming agent, for example, there may be mentioned the same foaming agents as the above thermal decomposition type foaming agents. The proportion of the expanding agent occupying the hollow particle type foaming agent is preferably from 5 to 30% by mass. Examples of the thermoplastic resin constituting the hollow particle type foaming agent include thermoplastic resins such as homopolymers or copolymers derived from (meth)acrylonitrile, (meth)acrylates, vinyl halides, vinylidene halides, styrene-based monomers, vinyl acetate, butadiene, chloroprene, vinylpyridine, and the like. The thermoplastic resins may be crosslinked or crosslinkable with a crosslinking agent such as divinylbenzene, ethylene glycol di(meth)acrylate, triethylene glycol di(meth)acrylate, trimethylolpropane tri(meth)acrylate, 1,3-butylene glycol di(meth)acrylate, allyl (meth)acrylate, triacrylformal, or triallyl isocyanurate. The hollow particle type foaming agent may be used singly or two or more thereof may be used in combination. The mass average particle size of the hollow particle type foaming agent (in an unexpanded microsphere state) is preferably from 1 to 100 µm.

The amount of the hollow particle type foaming agent to be added is not particularly limited and is, for example, from 0.1 to 100 parts by mass based on 100 parts by mass of the polymer composition excluding the hollow particle type foaming agent.

### <Physical Foaming Agent>

Examples of the physical foaming agent include aliphatic hydrocarbons such as propane, butane, and pentane; alicyclic hydrocarbons such as cyclobutane, cyclopentane, and cyclohexane; halogenated hydrocarbons such as chlorodifluoromethane, difluoromethane, trifluoromethane, trichlorofluoromethane, dichloromethane, dichlorofluoromethane, dichlorodifluoromethane, trichlorofluoromethane, chloromethane, chloroethane, dichlorotrifluoroethane, dichlorofluoroethane, chlorodifluoroethane, dichloropentafluoroethane, pentafluoroethane, trifluoroethane, dichlorotetrafluoroethane, trichlorotrifluoroethane, tetrachlorodifluoroethane, chloropentafluoroethane, and perfluorocyclobutane; inorganic gases such as carbon dioxide, nitrogen, and air; and water. In addition, it is also possible to mold the foamed body using a supercritical fluid. Examples of the supercritical fluid include super critical fluids of nitrogen or carbon dioxide. Physical foaming agents may be used singly or two or more thereof may be used in combination.

The amount of the physical foaming agent to be added is not particularly limited but is, for example, from 0.1 to 100 parts by mass based on 100 parts by mass of the polymer composition excluding the physical foaming agent.

Among the foaming agents, supercritical carbon dioxide is preferable since it becomes a supercritical state at relatively low temperature and pressure, it is suitable for foam molding owing to a fast impregnation rate into the polymer composition in a molten state and capability of high density contamination, and uniform air bubbles can be obtained.

### <Foaming Nucleating Agent>

The second polymer composition of the invention may contain a foaming nucleating agent (nucleating agent).

Examples of the foaming nucleating agent include powders of inorganic compounds such as calcium carbonate, talc, mica, silica, and titania. By incorporating the foaming nucleating agent to the polymer composition, the foamed cell diameter can be easily controlled and a foamed molded body having appropriate flexibility and the like can be obtained.

The particle diameter of the foaming nucleating agent is preferably from 0.1 ∼ 50 µm, and more preferably from 0.1 ∼ 20 µm. When the particle diameter of the foaming nucleating agent is the lower limit of the range or more, the effect as a foaming nucleating agent is easily obtained, the foamed cell diameter becomes small, and the foamed cell diameter tends to be uniform. When the particle diameter of the foaming nucleating agent is the upper limit of the range or less, the foamed cell diameter and the number of the foamed cells become appropriate and cushioning properties of the foamed molded body tends to be excellent.

The content ratio of the foaming nucleating agent is preferably from 0 to 20 parts by mass, more preferably from 0.01 to 15 parts by mass, and more preferably from 0.1 to 10 parts by mass based on 100 parts by mass of the polymer composition. Incidentally, it is also preferable to add the foaming nucleating agent to a molding machine, for example, as a master batch of polypropylene resin or the like.

### Examples

The following will describe the present invention more specifically based on Examples, but the invention is not limited to these Examples. In the description of the following Examples and the like, parts are shown on a mass basis unless otherwise specified.

### <Production of Hydrogenation Catalyst>

According to the description of Japanese Patent No. 3777810, bis(η5-cyclopentadienyl)titanium (furfuryloxy) chloride (hereinafter also referred to as "chlorobis(2,4-cyclopentadienyl)titanium (IV) furfuryl alkoxide") that is a hydrogenation catalyst was obtained.

### <Physical Property Values of (Hydrogenated) Conjugated Diene Polymer>

Physical property values of (hydrogenated) conjugated diene polymers were measured by the following methods. However, the physical property values of the following (1) to (3) are those for the polymers before hydrogenation and the physical property values of the following (4) to (7) are those for the polymers after hydrogenation.

### (1) Vinyl bond content and styrene unit content

The vinyl bond content was determined by the infrared absorption spectrum method (Morello method). However, the unit of the vinyl bond content is on a basis of percent by mol. The content of the styrene unit was determined with preparing a calibration curve by the infrared absorption spectrum method (Morello method). However, the unit of the content of the styrene unit is on a basis of % by mass.

### (2) Weight-average molecular weight (Mw)

The weight-average molecular weight (Mw) is weight-average molecular weight in terms of polystyrene measured by gel permeation chromatography (GPC) (HLC-8120 manufactured by Tosoh Corporation).
- Developing solvent: tetrahydrofuran (THF)
- Measuring temperature: 40°C
- Column: TSKgel GMH×1

### (3) Coupling Rate

The coupling rate is a value indicating the content of the coupled or branched polymer in the total polymer. It was determined from the ratio of the coupled polymer after the addition of a coupling agent, by GPC analysis.

### (4) Hydrogenation rate

The hydrogenation rate was calculated from ¹H-NMR spectrum at 400MHz using carbon tetrachloride as a solvent.

### (5) Melt flow rate (MFR)

The melt flow rate (MFR) was measured under conditions of temperature: 230°C and load: 2.16kg in accordance with JIS K7210.

### (6) Mooney viscosity (MV1+4)

The Mooney viscosity (MV1+4) was measured using an L rotor under conditions of preheating for 1 minutes, a rotor operating time of 4 minutes, and a temperature of 125°C in the case of hydrogenated BR or a temperature of 100°C in the case of hydrogenated SBR in accordance with JIS K6300.

### (7) Glass transition temperature (Tg)

The glass transition temperature (Tg) was determined in accordance with ASTM D3418.

### [Production of Hydrogenated Conjugated Diene Polymer (Hydrogenated BR)]

### [Example 1A]

Into a reaction vessel having an inner volume of 50 liters, which was subjected to nitrogen substitution, were added 25.6 kg of cyclohexane, 38.4 kg of tetrahydrofuran, 3200 g of 1,3-butadiene, and 29.1 mmol of N-(tert-butyldimethylsilyl)piperazine and 38.0 mmol of n-butyllithium as a polymerization initiator, and adiabatic polymerization from a polymerization initiation temperature of 40°C was carried out.

After completion of the polymerization, 32.3 mmol of N,N-bis(trimethylsilyl)-aminopropylmethyldiethoxysilane was added and a reaction was carried out for 15 minutes. Then, while supplying hydrogen gas at a pressure of 0.4 MPa-Gauge into the system, stirring was performed for 10 minutes.

The reaction liquid was controlled to 80°C or more, 4.48 g of diethylaluminum chloride, 3.11 g of bis(η5-cyclopentadienyl)titanium(furfuryloxy) chloride, and 1.18 g of n-butyllithium were added, and a hydrogenation reaction was carried out so as to keep a hydrogen pressure of 1.0 MPa. At the time when the absorption of hydrogen reached a cumulative amount at which an objective hydrogenation rate was achieved, the reaction liquid was returned to normal temperature and normal pressure and was extracted from the reaction vessel to obtain a polymer solution.

The obtained polymer solution was subjected to solvent removal by steam stripping, and then dried by a hot roll that was temperature-controlled to 110°C, thereby obtaining a hydrogenated conjugated diene polymer A.

### [Example 2A]

A hydrogenated conjugated diene polymer B was obtained in the same manner as in Example 1A except that N-(tert-butyldimethylsilyl)piperazine was changed to N'-(N,N-bis(trimethylsilyl)aminoethyl)piperazine in Example 1A.

### [Example 3A]

A hydrogenated conjugated diene polymer C was obtained in the same manner as in Example 1A except that the operation that 32.3 mmol of N,N-bis(trimethylsilyl)-aminopropylmethyldiethoxysilane was added and a reaction was carried out for 15 minutes was changed to the operation that 1.60 mmol of silicon tetrachloride was added and a reaction was carried out for 5 minutes and then 29.1 mmol of N,N-bis(trimethylsilyl)-aminopropylmethyldiethoxysilane was added and a reaction was carried out for 15 minutes, in Example 1A.

### [Example 4A]

A hydrogenated conjugated diene polymer D was obtained in the same manner as in Example 1A except that, after the polymer solution after the hydrogenation reaction was obtained, 32.1 mmol of silicon tetrachloride as an onium-forming agent was added and a reaction was carried out for 5 minutes, in Example 1A.

### [Comparative Example 1A]

Into a reaction vessel having an inner volume of 50 liters, which was subjected to nitrogen substitution, were added 25.6 kg of cyclohexane, 38.4 kg of tetrahydrofuran, 3200 g of 1,3-butadiene, and 38.0 mmol of n-butyllithium as a polymerization initiator, and adiabatic polymerization from a polymerization initiation temperature of 40°C was carried out. After completion of the polymerization, while supplying hydrogen gas at a pressure of 0.4 MPa-Gauge into the system, stirring was performed for 10 minutes. The reaction liquid was controlled to 80°C or more, 2.32 g of diethylaluminum chloride and 5.19 g of bis(η5-cyclopentadienyl)titanium (furfuryloxy) chloride were added, and a hydrogenation reaction was carried out so as to keep a hydrogen pressure of 1.0 MPa. At the time when the absorption of hydrogen reached a cumulative amount at which an objective hydrogenation rate was achieved, the reaction liquid was returned to normal temperature and normal pressure and was extracted from the reaction vessel to obtain a polymer solution. The obtained polymer solution was subjected to solvent removal by steam stripping, and then dried by a hot roll that was temperature-controlled to 110°C, thereby obtaining a hydrogenated conjugated diene polymer E.

### [Comparative Example 2A]

A conjugated diene polymer F was obtained in the same manner as in Example 1A except that the hydrogenation reaction was not carried out.

### [Comparative Example 3A]

A hydrogenated conjugated diene polymer G was obtained in the same manner as in Example 1A except that N-(tert-butyldimethylsilyl)piperazine was changed to piperidine in Example 1A.

### [Example 4A]

A hydrogenated conjugated diene polymer H was obtained in the same manner as in Example 1A except that the operation that 29.1 mmol of N-(tertbutyldimethylsilyl)piperazine and 38.0 mmol of n-butyllithium as a polymerization initiator were added was changed to the operation that 38.0 mmol of n-butyllithium was added, in Example 1A.

### [Kneading Method and Characteristic Evaluation of Polymer Composition]

Using a plastomill (inner capacity: 250 ml) fitted with a temperature controlling device, as first-stage kneading, the (hydrogenated) conjugated diene polymer obtained in each of Examples and Comparative Examples, zinc white, stearic acid, silica, a coupling agent, SRF carbon, and a softener were kneaded under the conditions of a filling rate of 72% by volume, a rotational number of 60 rpm, and 100°C, according to the blending formulation of Table 2. Then, as second-stage kneading, after cooling of the blend obtained above to room temperature, a crosslinking agent was kneaded according to the blending formulation of Table 2. The kneaded product was molded and then vulcanized in a vulcanization press at 160°C for a predetermined time to manufacture a crosslinked body, and the following characteristic evaluation was performed.

[Characteristic Evaluation of Ordinary State Physical Properties] Tensile strength at break (TB), tensile elongation at break (EB): They were measured at a measurement temperature of 23°C in accordance with JIS K6251. A larger numerical value indicates that the crosslinked body has more excellent mechanical properties. Hardness (Duro A) was measured in accordance with JIS K6253.

[Characteristic Evaluation of High Temperature Physical Properties] Tensile strength at break (TB), tensile elongation at break (EB): They were measured at a measurement temperature of 120°C in accordance with JIS K6251. A larger numerical value indicates that the crosslinked body has more excellent mechanical properties.

[Characteristic Evaluation of Dynamic Modulus] dynamic/static ratio: Using a block-shaped test piece, a dynamic modulus 1 at 70 Hz was measured under the conditions of a dynamic strain of 1% and a temperature of 25°C in accordance with JIS K6394. Also, similarly, a dynamic modulus 2 at 0.1 Hz was measured under the conditions of a dynamic strain of 10% and a temperature of 25°C. Incidentally, upon the measurement, a viscoelasticity-measuring device (trade name "ARES") manufactured by Rheometric Inc. was used. The dynamic/static ratio was determined as a value calculated from the following expression. Incidentally, the dynamic/static ratio indicates that the crosslinked body is more superior in vibration damping properties when the ratio is closer to 1.

Expression: Dynamic/static ratio = (Dynamic modulus 1 at 70 Hz)/(Dynamic modulus 2 at 0.1 Hz)

### [Table 1]

**Table 1: BR Polymerization Formulation**

| | | | Example 1A | Example 2A | Example 3A | Example 4A | Comparative Example 1A | Comparative Example 2A | Comparative Example 3A | Comparative Example 4A |
|---|---|---|---|---|---|---|---|---|---|---|
| Hydrogenated conjugated diene polymer or conjugated diene polymer | | | A | B | C | D | E | F | G | H |
| Solvent (g) | Cyclohexane | | 25600 | 25600 | 25600 | 25600 | 25600 | 25600 | 25600 | 25600 |
| Vinyl content regulator (g) | Tetrahydrofuran | | 38.4 | 38.4 | 38.4 | 38.4 | 38.4 | 38.4 | 38.4 | 38.4 |
| Polymerization monomer (g) | Butadiene | | 3200 | 3200 | 3200 | 3200 | 3200 | 3200 | 3200 | 3200 |
| Polymerization initiator (mmol) | n-Butyllithium | | 38.0 | 38.0 | 38.0 | 38.0 | 38.0 | 38.0 | 38.0 | 38.0 |
| | N-(tert-butyldimethylsilyl)piperazine | | 29.1 | - | 29.1 | 29.1 | - | 29.1 | - | - |
| | N'-(N,N-bis(trimethylsilyl)aminoethyl)piperazine | | - | 29.1 | - | - | - | - | - | - |
| | Piperidine | | - | - | - | - | - | - | 29.1 | - |
| Coupling agent (mmol) | Silicon tetrachloride | | - | - | 1.60 | - | - | - | - | - |
| Modifier (mmol) | N,N-bis(trimethylsilyl)aminopropy | | 32.3 | 32.3 | 29.1 | 32.3 | - | 32.3 | 32.3 | 32.3 |
| Onium forming agent (after hydrogenation reaction) (mmol) | Silicon tetrachloride | | - | - | - | 32.1 | - | - | - | - |
| Hydrogenation reaction | | | present | present | present | present | present | absent | present | present |
| Properties of polymer | Weight-average molecular weight (×10⁴) | | 22 | 20 | 34 | 20 | 21 | 20 | 20 | 21 |
| | Vinyl bond content (mol%) | | 37 | 38 | 37 | 37 | 38 | 36 | 37 | 36 |
| | Hydrogenation rate (%) | | 90 | 91 | 90 | 90 | 89 | 0 | 90 | 90 |
| | MV1+4 (125°C) | | 21 | 23 | 35 | 68 | 18 | 5 | 20 | 19 |
| Physical properties of crosslinked body | Ordinary state physical properties | TB (MPa) | 16.2 | 16.5 | 18.2 | 16.0 | 12.0 | 6.7 | 16.0 | 15.8 |
| | | EB (%) | 450 | 450 | 460 | 440 | 490 | 250 | 460 | 460 |
| | | Hardness (Duro A) | 55 | 54 | 56 | 56 | 60 | 44 | 56 | 57 |
| | High temperature physical properties (120°C) | TB (MPa) | 4.8 | 4.5 | 4.6 | 4.9 | 3.5 | 1.9 | 4.2 | 4.2 |
| | | EB (%) | 270 | 270 | 280 | 250 | 300 | 160 | 270 | 250 |
| | Dynamic modulus | Dynamic/static ratio | 1.22 | 1.23 | 1.26 | 1.24 | 1.68 | 1.25 | 1.3 | 1.31 |

### [Table 2]

**Table 2: BR Formulation Table**

| | | |
|---|---|---|
| Blending formulation (parts) | Polymer | 100 |
| | Zinc white | 5 |
| | Stearic acid | 0.5 |
| | Silica | 30 |
| | Coupling agent | 3 |
| | SRF carbon | 5 |
| | Softener | 40 |
| | Crosslinking agent-1 | 5 |
| | Crosslinking agent-2 | 0.2 |

| | | |
|---|---|---|
| (1) Zinc white: trade name "Zinc Oxide JIS #2" (manufactured by Hakusui Tech Co., Ltd.) (2) Stearic acid: trade name "LUNAC S30" (manufactured by Kao Corporation) (3) Silica: trade name "Nipsil ER" (manufactured by Tosoh Silica Corporation) (4) Coupling agent: trade name "TSL8370" (manufactured by GE Toshiba Silicones Co., Ltd.) (5) SRF carbon: trade name "SEAST S" (manufactured by Tokai Carbon Co., Ltd.) (6) Softener: trade name "Diana Process PW90" (manufactured by Idemitsu Kosan Co., Ltd.) (7) Crosslinking agent-1: trade name "PERCUMYL D-40" (manufactured by NOF Corporation) (8) Crosslinking agent-2: trade name "IOU" (manufactured by Tsurumi Chemical Industry Co., Ltd.) | | |

In Comparative Example 4A, since n-butyllithium that is a conventional polymerization initiator is used, it is surmised that the evaluation of the dynamic/static ratio is bad. In Comparative Example 3A, since a modified polymerization initiator composed of n-butyllithium and piperidine is used, it is surmised that the evaluation of the dynamic/static ratio is bad. In Comparative Example 2A, since no hydrogenation reaction is carried out, it is surmised that the evaluation of Tb and Eb is low. Contrarily, in Example 1A, since a modified polymerization initiator composed of n-butyllithium and a specific amine compound is used, it is surmised that the evaluation of the dynamic/static ratio is excellent.

### [Production of Hydrogenated Conjugated Diene Polymer (hydrogenated SBR)]

### [Example 1B]

Into a reaction vessel having an inner volume of 50 liters, which was subjected to nitrogen substitution, were added 25.6 kg of cyclohexane, 179 g of tetrahydrofuran, 864 g of styrene, 2336 g of 1,3-butadiene, and 23.8 mmol of N-(tertbutyldimethylsilyl)piperazine and 33 mmol of n-butyllithium as a polymerization initiator, and adiabatic polymerization from a polymerization initiation temperature of 45°C was carried out. At the time when polymerization conversion reached 99%, 64 g of 1,3-butadiene was further added over a period of 2 minutes and polymerization was continued for another 3 minutes.

After completion of the polymerization, 26.5 mmol of N,N-bis(trimethylsilyl)-aminopropylmethyldiethoxysilane was added and a reaction was carried out for 15 minutes. Then, while supplying hydrogen gas at a pressure of 0.4 MPa-Gauge into the system, stirring was performed for 10 minutes.

The reaction liquid was controlled to 80°C or more, 3.67 g of diethylaluminum chloride, 2.27 g of bis(η5-cyclopentadienyl)titanium (furfuryloxy) chloride, and 0.83 g of n-butyllithium were added, and a reaction was carried out for 2 hours so as to keep a hydrogen pressure of 1.0 MPa. After the reaction, the reaction liquid was returned to normal temperature and normal pressure, and was extracted from the reaction vessel to obtain a polymer solution.

The obtained polymer solution was subjected to solvent removal by steam stripping, and then dried by a hot roll that was temperature-controlled to 110°C, thereby obtaining a hydrogenated conjugated diene copolymer a.

### [Example 2B]

A hydrogenated conjugated diene copolymer b was obtained in the same manner as in Example 1B except that N-(tert-butyldimethylsilyl)piperazine was changed to N'-(N,N-bis(trimethylsilyl)aminoethyl)piperazine in Example 1B.

### [Example 3B]

A hydrogenated conjugated diene copolymer c was obtained in the same manner as in Example 1B except that the operation that 26.5 mmol of N,N-bis(trimethylsilyl)-aminopropylmethyldiethoxysilane was added and a reaction was carried out for 15 minutes was changed to the operation that 1.33 mmol of silicon tetrachloride was added and a reaction was carried out for 5 minutes and then 22.2 mmol of N,N-bis(trimethylsilyl)-aminopropylmethyldiethoxysilane was added and a reaction was carried out for 15 minutes, in Example 1B.

### [Example 4B]

A hydrogenated conjugated diene copolymer d was obtained in the same manner as in Example 1B except that, after the polymer solution after the hydrogenation reaction was obtained, 26.8 mmol of silicon tetrachloride as an onium-forming agent was added and a reaction was carried out for 5 minutes, in Example 1B.

### [Comparative Example 1B]

Into a reaction vessel having an inner volume of 50 liters, which was subjected to nitrogen substitution, were added 25.6 kg of cyclohexane, 179 g of tetrahydrofuran, 864 g of styrene, 2336 g of 1,3-butadiene, and 33 mmol of n-butyllithium as a polymerization initiator, and adiabatic polymerization from a polymerization initiation temperature of 45°C was carried out. At the time when polymerization conversion reached 99%, 64 g of 1,3-butadiene was further added over a period of 2 minutes and polymerization was continued for another 3 minutes. After completion of the polymerization, while supplying hydrogen gas at a pressure of 0.4 MPa-Gauge into the system, stirring was performed for 10 minutes. The reaction liquid was controlled to 80°C or more, 3.67 g of diethylaluminum chloride, 3.79 g of bis(η5-cyclopentadienyl)titanium (furfuryloxy) chloride, and 0.83 g of n-butyllithium were added, and a reaction was carried out for 2 hours so as to keep a hydrogen pressure of 1.0 MPa. After the reaction, the reaction liquid was returned to normal temperature and normal pressure and was extracted from the reaction vessel to obtain a polymer solution. The obtained polymer solution was subjected to solvent removal by steam stripping, and then dried by a hot roll that was temperature-controlled to 110°C, thereby obtaining a hydrogenated conjugated diene copolymer e.

### [Comparative Example 2B]

A conjugated diene copolymer f was obtained in the same manner as in Example 1B except that the hydrogenation reaction was not carried out.

### [Comparative Example 3B]

A hydrogenated conjugated diene copolymer g was obtained in the same manner as in Example 1B except that N-(tert-butyldimethylsilyl)piperazine was changed to piperidine in Example 1B.

### [Comparative Example 4B]

A hydrogenated conjugated diene copolymer h was obtained in the same manner as in Example 1B except that the operation that 23.8 mmol of N-(tertbutyldimethylsilyl)piperazine and 33 mmol of n-butyllithium as a polymerization initiator were added was changed to the operation that 33 mmol of n-butyllithium was added, in Example 1B.

### [Kneading Method and Characteristic Evaluation of Polymer Composition]

Using a plastomill (inner capacity: 250ml) fitted with a temperature controlling device, as first-stage kneading, the (hydrogenated) conjugated diene copolymer obtained in any of Examples and Comparative Examples, zinc white, stearic acid, silica, a coupling agent, and an antiaging agent were kneaded under the conditions of a filling rate of 72% by volume, a rotational number of 60 rpm, and 100°C, according to the blending formulation of Table 4. Then, as second-stage kneading, after cooling of the blend obtained above to room temperature, a crosslinking agent and a crosslinking aid were kneaded according to the blending formulation of Table 4. The kneaded product was molded and then vulcanized in a vulcanization press at 160°C for a predetermined time to prepare a crosslinked body and the following characteristic evaluation was performed.
(i) 0°Ctanδ: It was measured under the conditions of a tensile dynamic strain of 0.14%, an angular velocity of 100 radians per second, and 0°C using the above crosslinked body as a measurement sample and using a dynamic spectrometer (manufactured by Rheometrics of US). The value is indicated as an index where Comparative Example 1B is taken as 100 and a larger numerical value means larger and better wet skid resistance.
(ii) 70°Ctanδ: It was measured under the conditions of a tensile dynamic strain of 0.7%, an angular velocity of 100 radians per second, and 70°C using the above crosslinked body as a measurement sample and using a dynamic spectrometer (manufactured by Rheometrics of US). The value is indicated as an index where Comparative Example 1B is taken as 100 and a larger numerical value means smaller and better low hysteresis loss properties.
(iii) Abrasion resistance: It was measured at 25°C with a load of 10 N in accordance with JIS K6264 using the above crosslinked body as a measurement sample and using a DIN abrasion tester (manufactured by Toyo Seiki Co., Ltd.). The value is indicated as an index where Comparative Example 1B is taken as 100 and a larger numerical value means better abrasion resistance.
(iv) Tensile strength at break (TB), tensile elongation at break (EB): Measurement was performed at room temperature (23°C) in accordance with JIS K6251 using the above crosslinked body as a measurement sample. A larger numerical value indicates more excellent mechanical properties.

### [Table 3]

**Table 3: SBR Polymerization Formulation**

| | | Example 1B | | Example 2B | Example 3B | Example 4B | Compara-tive Example 1B | Comparative Example 2B | | Compara-tive Example 3B | Compara-tive Example 4B |
|---|---|---|---|---|---|---|---|---|---|---|---|
| Hydrogenated conjugated diene polymer or conjugated diene polymer | | a | | b | c | d | e | f | | g | h |
| Solvent (g) | Cyclohexane | 25600 | | 25600 | 25600 | 25600 | 25600 | 25600 | | 25600 | 25600 |
| Vinyl content regulator (g) | Tetrahydrofuran | 179 | | 179 | 179 | 179 | 179 | 179 | | 179 | 179 |
| Polymerization monomer (g) | Styrene | 864 | | 864 | 864 | 864 | 864 | 864 | | 864 | 864 |
| | Butadiene | 2336 | | 2336 | 2336 | 2336 | 2336 | 2336 | | 2336 | 2336 |
| | Butadiene (post-addition) | 64 | | 64 | 64 | 64 | 64 | 64 | | 64 | 64 |
| Polymerization initiator (mmol) | n-Butyllithium | 33 | | 33 | 33 | 33 | 33 | 33 | | 33 | 33 |
| | N-(tert-butyldimethylsilyl)piperazine | 23.8 | | - | 23.8 | 23.8 | - | 23.8 | | - | - |
| | N'-(N,N-bis(trimethylsilyl)aminoethyl)piperazine | - | | 23.8 | - | - | - | - | | - | - |
| | Piperidine | - | | - | - | - | - | - | | 23.8 | - |
| Coupling agent (mmol) | Silicon tetrachloride | - | | - | 1.33 | - | - | - | | - | - |
| Modifier (mmol) | N,N-bis(trimethylsilyl)aminopropylmethyldiethoxysilane | 26.5 | | 26.5 | 22.2 | 26.5 | - | 26.5 | | 26.5 | 26.5 |
| Onium-forming agent (after hydrogenation reaction) (mmol) | Silicon tetrachloride | - | | - | - | 26.8 | - | - | | - | - |
| Hydrogenation reaction | | present | | present | present | present | present | absent | | present | present |
| Properties of polymer | Vinyl bond content (mol%) | 48 | 48 | 47 | 48 | 48 | 48 | 47 | 47 | 48 | 48 |
| | Styrene unit content (% by mass) | 27 | 27 | 27 | 27 | 27 | 27 | 27 | 27 | 27 | 25 |
| | Hydrogenation rate (%) | 98 | 98 | 98 | 98 | 97 | 98 | 0 | 0 | 97 | 95 |
| | Tg (°C) | -39 | -38 | -38 | -38 | -39 | -38 | -36 | -36 | -38 | -38 |
| | Weight-average molecular weight (×10⁴) | 20 | 22 | 20 | 32 | 20 | 20 | 20 | 20 | 21 | 21 |
| | MV1+4 (100°C) | 58 | 58 | 58 | 90 | 120 | 48 | 10 | 10 | 52 | 56 |
| Blending formulation | | I | II | I | I | I | I | I | II | I | I |
| Physical properties of crosslinked body | TB (MPa) | 23 | 22 | 23 | 24 | 23 | 26 | 13 | 16 | 23 | 23 |
| | EB (%) | 250 | 370 | 260 | 320 | 240 | 320 | 150 | 340 | 240 | 240 |
| | 0°Ctanδ (index) | 108 | 105 | 107 | 104 | 102 | 100 | 110 | 107 | 104 | 103 |
| | 70°Ctanδ (index) | 220 | 204 | 226 | 205 | 210 | 100 | 144 | 118 | 194 | 192 |
| | Abrasion resistance (index) | 153 | 140 | 157 | 136 | 146 | 100 | 110 | 108 | 130 | 128 |

### [Table 4]

**Table 4: SBR Blending Formulation**

| | | Blending formulation I | Blending formulation II |
|---|---|---|---|
| Blending formulation (parts) | Polymer | 100 | 100 |
| | Zinc white | 3 | 3 |
| | Stearic acid | 2 | 2 |
| | Silica | 45 | 45 |
| | Coupling agent | 3.6 | 3.6 |
| | Antiaging agent | 1 | 1 |
| | Crosslinking agent | 1.5 | 1.5 |
| | Crosslinking accelerator-1 | 1.5 | |
| | Crosslinking accelerator-2 | 1 | |
| | Crosslinking accelerator-3 | | 1.5 |
| | Crosslinking accelerator-4 | | 1.8 |

| | | | |
|---|---|---|---|
| (1) Zinc white: trade name "Zinc Oxide JIS #2" (manufactured by Hakusui Tech Co., Ltd.) (2) Stearic acid: trade name "LUNAC S30" (manufactured by Kao Corporation) (3) Silica: trade name "ZEOSIL 1165MP" (manufactured by Rhodia) (4) Coupling agent: trade name "Si75" (manufactured by Evonik Degussa Japan) (5) Antiaging agent: trade name "OZONON 6C" (manufactured by Seiko Chemical Co., Ltd.) (6) Crosslinking agent: trade name "IOU" (manufactured by Tsurumi Chemical Industry Co., Ltd.) (7) Crosslinking accelerator-1: trade name "ACCEL TL" (manufactured by Kawaguchi Chemical Industry Co., Ltd.)) (8) Crosslinking acelerator-2: trade name "NOCCELER DM" (manufactured by Ouchi Shinko Chemical Industrial Co., Ltd.) (9) Crosslinking acelerator-3: trade name "NOCCELER D" (manufactured by Ouchi Shinko Chemical Industrial Co., Ltd.) (10) Crosslinking acelerator-4: trade name "NOCCELER CZ" (manufactured by Ouchi Shinko Chemical Industrial Co., Ltd.) | | | |

### [Production of Hydrogenated Conjugated Diene Block Copolymer]

### [Example 1C] SEBS

Into a reaction vessel having an inner volume of 50 liters, which was subjected to nitrogen substitution, were added 24 kg of cyclohexane, 473 g of styrene, 568 g of tetrahydrofuran, and 11.1 g of N-(tert-butyldimethylsilyl)piperazine and 5.5 g of n-butyllithium as a polymerization initiator, and first-stage polymerization was performed at a polymerization initiation temperature of 50°C and then, after the temperature was controlled to 15°C, 4471 g of 1,3-butadiene was added and second-stage polymerization was performed under an adiabatic condition. Thereafter, the temperature was controlled to 80°C, 316 g of styrene was added, and third-stage polymerization was performed under an adiabatic condition. After completion of the polymerization, the whole was allowed to stand for 10 minutes, while supplying hydrogen gas at a pressure of 0.4 MPa-Gauge.

The reaction liquid was controlled to 80°C, 2.5 g of silicon tetrachloride, 1.2 g of diethylaluminum chloride, and 2.9 g of bis(η5-cyclopentadienyl)titanium (furfuryloxy) chloride were added as a hydrogenation catalyst, and a reaction was carried out for 2 hours so as to keep a hydrogen pressure of 1.0 MPa. The reaction liquid was poured into a large amount of methanol, and the precipitated solid was recovered and then dried in a vacuum drier to obtain a hydrogenated block copolymer.

The obtained hydrogenated block copolymer had a hydrogenation rate of 98%, a weight-average molecular weight of 125,000, and a melt flow rate (230°C, 2.16 kg) of 30 g/10 minutes. The vinyl bond content measured at the end point of the third-stage block polymerization was calculated to be 79% by mol. The styrene unit content was 15% by mass.

### [Comparative Examples 1C and 1C'] SEBS

Hydrogenated block copolymers were obtained in the same manner as in Example 1C except that the operation that 11.1 g of N-(tert-butyldimethylsilyl)piperazine and 5.5 g of n-butyllithium as a polymerization initiator were added was changed to the operation that 4.7 g of piperidine and 5.5 g of n-butyllithium were added in Comparative Example 1C or the operation that 5.5 g of n-butyllithium alone was added in Comparative Example 1C', in Example 1C.

### [Example 2C] SEBS

Into a reaction vessel having an inner volume of 50 liters, which was subjected to nitrogen substitution, were added 24 kg of cyclohexane, 472 g of styrene, 201 g of tetrahydrofuran, and 13.1 g of N-(tert-butyldimethylsilyl)piperazine and 6.6 g of n-butyllithium as a polymerization initiator, and first-stage polymerization was performed at a polymerization initiation temperature of 50°C and then, after the temperature was controlled to 15°C, 4771 g of 1,3-butadiene was added and second-stage polymerization was performed under an adiabatic condition. After completion of the polymerization, 3.2 g of methyldichlorosilane was added and a reaction was carried out for 30 minutes. Then, the whole was allowed to stand for 10 minutes, while supplying hydrogen gas at a pressure of 0.4 MPa-Gauge.

The reaction liquid was controlled to 80°C, 0.95 g of silicon tetrachloride, 1.1 g of diethylaluminum chloride, and 3.1 g of bis(η5-cyclopentadienyl)titanium (furfuryloxy) chloride were added as a hydrogenation catalyst, and a reaction was carried out for 2 hours so as to keep a hydrogen pressure of 1.0 MPa. The reaction liquid was poured into a large amount of methanol, and the precipitated solid was recovered and then dried in a vacuum drier to obtain a hydrogenated block copolymer.

The obtained hydrogenated block copolymer had a hydrogenation rate of 98%, a weight-average molecular weight of 170,000, a coupling rate of 60%, and a melt flow rate (230°C, 2.16 kg) of 7 g/10 minutes. The vinyl bond content measured at the end point of the second-stage block polymerization was calculated to be 64% by mol. The styrene unit content was 9% by mass.

### [Comparative Example 2C] SEBS

A hydrogenated block copolymer was obtained in the same manner as in Example 2C except that the operation that 13.1 g of N-(tert-butyldimethylsilyl)piperazine and 6.6 g of n-butyllithium as a polymerization initiator were added was changed to the operation that 6.6 g of n-butyllithium alone was added, in Example 2C.

### [Example 3C] SEBS (silazane modification)

Into a reaction vessel having an inner volume of 50 liters, which was subjected to nitrogen substitution, were added 22 kg of cyclohexane, 562 g of styrene, 7.4 g of 2,2-di(tetrahydrofuryl)propane, and 11.3 g of N-(tert-butyldimethylsilyl)piperazine and 5.6 g of n-butyllithium as a polymerization initiator, and first-stage polymerization was performed at a polymerization initiation temperature of 50°C and then, after the temperature was controlled to 15°C, 5184 g of 1,3-butadiene was added and second-stage polymerization was performed under an adiabatic condition. Thereafter, the temperature was controlled to 80°C, 375 g of styrene was added, and third-stage polymerization was performed under an adiabatic condition. Then, 125 g of 1,3-butadiene was added.

After completion of the polymerization, 22.7 g of [N,N-bis(trimethylsilyl)-aminopropyl]methyldiethoxysilane was added and a reaction was carried out for 30 minutes, and the whole was allowed to stand for 10 minutes, while supplying hydrogen gas at a pressure of 0.4 MPa-Gauge.

The reaction liquid was controlled to 80°C, 9.4 g of diethylaluminum chloride, 7.6 g of bis(η5-cyclopentadienyl)titanium (furfuryloxy) chloride, and 2.0 g of n-butyllithium were added as a hydrogenation catalyst, and a reaction was carried out for 2 hours so as to keep a hydrogen pressure of 1.0 MPa. The reaction liquid was poured into a large amount of methanol, and the precipitated solid was recovered and then dried in a vacuum drier to obtain a hydrogenated block copolymer.

The obtained hydrogenated block copolymer had a hydrogenation rate of 98%, a weight-average molecular weight of 135,000, and a melt flow rate (230°C, 2.16 kg) of 15 g/10 minutes. The vinyl bond content measured at the end point of the fourth-stage block polymerization was calculated to be 80% by mol. The styrene unit content was 15% by mass.

### [Comparative Example 3C] SEBS (silazane modification)

A hydrogenated block copolymer was obtained in the same manner as in Example 3C except that the operation that 11.3 g of N-(tert-butyldimethylsilyl)piperazine and 5.6 g of n-butyllithium as a polymerization initiator were added was changed to the operation that 5.6 g of n-butyllithium alone was added, in Example 3C.

### [Example 4C] CEBC

Into a reaction vessel having an inner volume of 50 liters, which was subjected to nitrogen substitution, were added 26 kg of cyclohexane, 973 g of 1,3-butadiene, 1.3 g of tetrahydrofuran, and 5.7 g of N-(tert-butyldimethylsilyl)piperazine and 2.8 g of n-butyllithium as a polymerization initiator, and first-stage polymerization was performed at a polymerization initiation temperature of 70°C. Then, after the temperature was controlled to 20°C and 31 g of tetrahydrofuran was added, 2270 g of 1,3-butadiene was added and second-stage polymerization was performed under an adiabatic condition.

After completion of the polymerization, 1.7 g of methyldichlorosilane was added and a reaction was carried out for 30 minutes, and the whole was allowed to stand for 10 minutes, while supplying hydrogen gas at a pressure of 0.4 MPa-Gauge.

The reaction liquid was controlled to 80°C, 0.24 g of diethylaluminum chloride, 2.1 g of bis(η5-cyclopentadienyl)titanium (furfuryloxy) chloride, and 0.26 g of n-butyllithium were added as a hydrogenation catalyst, and a reaction was carried out for 2 hours so as to keep a hydrogen pressure of 1.0 MPa. The reaction liquid was poured into a large amount of methanol, and the precipitated solid was recovered and then dried in a vacuum drier to obtain a hydrogenated block copolymer.

The obtained hydrogenated block copolymer had a hydrogenation rate of 98%, a weight-average molecular weight of 275,000, a coupling rate of 80%, and a melt flow rate (230°C, 2.16 kg) of 4.5 g/10 minutes. The vinyl bond content (vinyl bond content of block A) of the 1,3-butadiene unit measured at the end point of the first-stage block polymerization was 15% by mol. Furthermore, the vinyl bond content (vinyl bond content of block B) of the 1,3-butadiene unit in the second-stage block was calculated to be 36% by mol from the vinyl bond content of the 1,3-butadiene unit measured at the end point of the second-stage block polymerization and the vinyl bond content of the first stage.

### [Comparative Example 4C] CEBC

A hydrogenated block copolymer was obtained in the same manner as in Example 4C except that the operation that 5.7 g of N-(tert-butyldimethylsilyl)piperazine and 2.8 g of n-butyllithium as a polymerization initiator were added was changed to the operation that 2.8 g of n-butyllithium alone was added, in Example 4C.

### [Example 5C] SEBS

Into a reaction vessel having an inner volume of 50 liters, which was subjected to nitrogen substitution, were added 24 kg of cyclohexane, 1846 g of 1,3-butadiene, 1.2 g of tetrahydrofuran, and 11.6 g of N-(tert-butyldimethylsilyl)piperazine and 5.8 g of n-butyllithium as a polymerization initiator, and first-stage polymerization was performed at a polymerization initiation temperature of 70°C. Then, after the temperature was controlled to 20°C and 52 g of tetrahydrofuran was added, 2374 g of 1,3-butadiene and 791 g of styrene were added and second-stage polymerization was performed under an adiabatic condition. Thereafter, the temperature was controlled to 80°C, 264 g of styrene was added, and third-stage polymerization was performed under an adiabatic condition. After completion of the polymerization, the whole was allowed to stand for 10 minutes, while supplying hydrogen gas at a pressure of 0.4 MPa-Gauge.

The reaction liquid was controlled to 80°C, 3.2 g of methyldichlorosilane and 2.7 g of bis(η5-cyclopentadienyl)titanium (furfuryloxy) chloride were added as a hydrogenation catalyst, and a reaction was carried out for 2 hours so as to keep a hydrogen pressure of 1.0 MPa. The reaction liquid was poured into a large amount of methanol, and the precipitated solid was recovered and then dried in a vacuum drier to obtain a hydrogenated block copolymer.

The obtained hydrogenated block copolymer had a hydrogenation rate of 98%, a weight-average molecular weight of 140,000, and a melt flow rate (230°C, 2.16 kg) of 5.5 g/10 minutes. The vinyl bond content (vinyl bond content of block A) of the 1,3-butadiene unit measured at the end point of the first-stage block polymerization was 15% by mol. Furthermore, the vinyl bond content (vinyl bond content of block B) of the 1,3-butadiene unit in the second-stage block was calculated to be 41% by mol from the vinyl bond content of the 1,3-butadiene unit measured at the end point of the second-stage block polymerization and the vinyl bond content of the first stage. The styrene unit content was 20% by mass (the styrene unit content of block B was 25% by mass).

### [Comparative Example 5C] SEBC

A hydrogenated block copolymer was obtained in the same manner as in Example 5C except that the operation that 11.6 g of N-(tert-butyldimethylsilyl)piperazine and 5.8 g of n-butyllithium as a polymerization initiator were added was changed to the operation that 5.8 g of n-butyllithium alone was added, in Example 5C.

### [Example 6C] SEBC (silazane modification)

Into a reaction vessel having an inner volume of 50 liters, which was subjected to nitrogen substitution, were added 25 kg of cyclohexane, 829 g of 1,3-butadiene, 1.3 g of tetrahydrofuran, and 7.4 g of N-(tert-butyldimethylsilyl)piperazine and 3.7 g of n-butyllithium as a polymerization initiator, and first-stage polymerization was performed at a polymerization initiation temperature of 70°C and then, after the temperature was controlled to 20°C and 52 g of tetrahydrofuran was added, 3027 g of 1,3-butadiene was added and second-stage polymerization was performed under an adiabatic condition. Thereafter, the temperature was controlled to 80°C, 207 g of styrene was added, and third-stage polymerization was performed under an adiabatic condition. Then, 83 g of 1,3-butadiene was added.

After completion of the polymerization, 14 g of [N,N-bis(trimethylsilyl)-aminopropyl]methyldiethoxysilane was added and a reaction was carried out for 30 minutes, and the whole was allowed to stand for 10 minutes, while supplying hydrogen gas at a pressure of 0.4 MPa-Gauge.

The reaction liquid was controlled to 80°C, 1.5 g of silicon tetrachloride, 2.8 g of diethylaluminum chloride, 3.2 g of bis(η5-cyclopentadienyl)titanium (furfuryloxy) chloride, and 1.2 g of n-butyllithium were added as a hydrogenation catalyst, and a reaction was carried out for 2 hours while keeping a hydrogen pressure of 1.0 MPa. The reaction liquid was poured into a large amount of methanol, and the precipitated solid was recovered and then dried in a vacuum drier to obtain a hydrogenated block copolymer.

The obtained hydrogenated block copolymer had a hydrogenation rate of 98%, a weight-average molecular weight of 155,000, and a melt flow rate (230°C, 2.16 kg) of 3 g/10 minutes. The vinyl bond content (vinyl bond content of block A) of the 1,3-butadiene unit measured at the end point of the first-stage block polymerization was 15% by mol. Furthermore, the vinyl bond content (vinyl bond content of block B) of the 1,3-butadiene unit in the second-stage block was calculated to be 42% by mol from the vinyl bond content of the 1,3-butadiene unit measured at the end point of the second-stage block polymerization and the vinyl bond content of the first stage. The styrene unit content was 5% by mass.

### [Comparative Example 6C] SEBC (silazane modification)

A hydrogenated block copolymer was obtained in the same manner as in Example 6C except that the operation that 7.4 g of N-(tert-butyldimethylsilyl)piperazine and 3.7 g of n-butyllithium as a polymerization initiator were added was changed to the operation that 3.7 g of n-butyllithium alone was added, in Example 6C.

### [Production of Polymer Composition]

### [Example 1D]

In a Henschel mixer, 68 parts of polypropylene (trade name "BC06C" manufactured by Japan Polypropylene Corporation), 27 parts of polylactic acid (trade name "Ingeo 3001D" manufactured by Nature Works LLC), 5 parts of hydrogenated block copolymer obtained in Example 1C, and 0.1 parts of antiaging agent (trade name "Irganox 1010", manufactured by BASF) were mixed at room temperature for 30 seconds. Then, the resulting mixture was fed to a twin-screw extruder (same-direction non-meshing type screw, L/D = 33.5, manufactured by Ikegai Corporation, product name "PCM-45") at a discharge rate of 20 kg/hour and extrusion was performed at a temperature of 200°C at a screw rotation number of 200 rpm (shear rate: 470 s⁻¹) to obtain pellets. The obtained pellets were dried at 80°C for 5 hours using a dehumidification dryer to obtain a thermoplastic resin composition. The resulting thermoplastic resin composition was molded at a processing temperature of 200°C on an injection molding machine (manufactured by Japan Steel Works, Ltd.) to obtain a test piece for physical property evaluation.

### [Examples 2D and 3D and Comparative Examples 1D to 3D and 1D']

Thermoplastic resin compositions and test pieces for physical property evaluation were obtained in the same manner as in Example 1D except that the kind of the hydrogenated block copolymer was changed as described in Table 5, in Example 1D.

### [Example 4D]

In a Henschel mixer, 63 parts of polyethylene terephthalate (trade name "RT523C" manufactured by Nippon Unipet Co., Ltd.), 27 parts of polyethylene (trade name "Novatec UF331" manufactured by Japan Polypropylene Corporation), 10 parts of hydrogenated block copolymer obtained in Example 4C, and 0.1 parts of antiaging agent (trade name "Irganox 1010", manufactured by BASF) were mixed at room temperature for 30 seconds. Then, the resulting mixture was fed to a twin-screw extruder (same-direction non-meshing type screw, L/D = 33.5, manufactured by Ikegai Corporation, product name "PCM-45") at a discharge rate of 20 kg/hour and extrusion was performed at a temperature of 280°C at a screw rotation number of 200 rpm (shear rate: 470 s⁻¹) to obtain pellets. The obtained pellets were dried at 80°C for 5 hours using a dehumidification dryer to obtain a thermoplastic resin composition. The resulting thermoplastic resin composition was molded at a processing temperature of 280°C on an injection molding machine (manufactured by Japan Steel Works, Ltd.) to obtain a test piece for physical property evaluation.

### [Examples 5D and 6D and Comparative Examples 4D to 6D]

Thermoplastic resin compositions and test pieces for physical property evaluation were obtained in the same manner as in Example 4D except that the kind of the hydrogenated block copolymer was changed as described in Table 6, in Example 4D.

Using the thermoplastic resin compositions and test pieces obtained in the above, the following evaluation was performed.

### [Evaluation Methods for Test Pieces]

### (1) Rigidity

A flexural modulus of the test piece was measured under the temperature condition of 23°C by a three-point bending test method in accordance with ISO 178. The magnitude of the flexural modulus was used as an indicator of the rigidity of the test piece.

### (2) Impact resistance (Charpy impact strength)

According to ISO 179, Charpy impact strength of the test piece was measured under the temperature condition of 23°C on a by Charpy impact tester. The magnitude of the Charpy impact strength was taken as one indicator representing the impact resistance of the test piece. Incidentally, NB indicates that the test piece was not destroyed in this test.

### (3) Impact resistance (surface impact resistance)

As another indicator representing the impact resistance of the test piece, the surface impact resistance of the test piece was measured. As for the surface impact resistance, a flat plate-shaped test piece of 55 mm × 80 mm × 2.4 mm obtained by injection molding of the resin composition obtained in each of Examples and the like was placed on a hole of 25 mmφ, the test piece was hit at a speed of 2.4 mm/sec by using a hitting bar of 15.7 mmφ having a hemisphere tip, and breaking energy was calculated from the measurement of the displacement and the load until the test piece was broken. The magnitude of the breaking energy was taken as an indicator of the surface impact resistance.

### (4) Tensile strength at break and tensile elongation at break

According to ISO 527, a tensile test of the test piece was performed under the temperature condition of 23°C to measure the tensile strength at break and the tensile elongation at break.

### (5) Specularity

The surface of the test piece which was molded into a flat plate-shape by injection molding of the resin composition obtained in each of Examples and the like was visually observed according to the following criteria to evaluate the specularity of the test piece.
○: distortion of an image that reflected in the test piece is small.
Δ: distortion of an image that reflected in the test piece is between ○ and ×.
×: distortion of an image that reflected in the test piece is large.

### (6) Delamination

The test piece which had been molded into a flat plate-shape by injection molding of the resin composition obtained in each of Examples and the like was scored in a grid pattern with a cutter and an adhesive tape was pasted to the cut. Immediately, the adhesive tape was peeled off by pulling the tape slowly so that the angle between the adhesive tape and the test piece was 90°, it was visually observed whether at least a part of the surface layer of the test piece was peeled off or not, and the delamination of the test piece was evaluated according to the following criteria.
○: surface is not peeled off.
×: surface is peeled off.

The results are shown in Table 5 and Table 6. As is apparent from the results, Examples in which a specific modified polymerization initiator was used were excellent in evaluation of the rigidity, the impact resistance, and the tensile elongation at break as compared with Comparative Examples in which the initiator was not used.

### [Table 5]

**Table 5**

| | | | Example ID | Comparative Example ID | Comparative Example ID' | Example 2D | Comparative Example 2D | Example 3D | Comparative Example 3D |
|---|---|---|---|---|---|---|---|---|---|
| Component (I): Hydrogenated conjugated diene polymer | Kind | | synthesized in Example 1C | synthesized in Comparative Example 1C | synthesized in Comparative Example 1C' | synthesized in Example 2C | synthesized in Comparative Example 2C | synthesized in Example 3C | synthesized in Comparative Example 3C |
| | Solvent (g) | cyclohexane | 24000 | 24000 | 24000 | 24000 | 24000 | 22000 | 22000 |
| | Vinyl content regulator (g) | tetrahydrofuran | 568 | 568 | 568 | 201 | 201 | | |
| | | 2 ,2-di (tetrahydrofuryl)propane | | | | | | 7.4 | 7.4 |
| | Polymerization monomer (g) | First stage: styrene | 473 | 473 | 473 | 472 | 472 | 562 | 562 |
| | | Second stage: butadiene | 4471 | 4471 | 4471 | 4771 | 4771 | 5184 | 5184 |
| | | Third stage: styrene | 316 | 316 | 316 | | | 375 | 375 |
| | | Fourth stage: butadiene | | | | | | 125 | 125 |
| | Polymerization initiator (g) | n-butyllithium | 5.5 | 5.5 | 5.5 | 6.6 | 6.6 | 5.6 | 5.6 |
| | | N-(tert-butyldimethylsilyl)piperazine | 11.1 | | | 13.1 | | 11.3 | |
| | | piperidine | | 4.7 | | | | | |
| | Coupling agent (g) | methyldichlorosilane | | | | 3.2 | 3.2 | | |
| | Modifier (g) | N,N-bis(trimethylsilyl)aminopropylmethyldiethoxysilane | | | | | | 22.7 | 22.7 |
| | Weight-average molecular weight (×10⁴) | | 12.5 | 13.0 | 12.5 | 17.0 | 17.0 | 13.5 | 13.5 |
| | Vinyl bond content (mol%) | | 79 | 79 | 79 | 64 | 64 | 80 | 80 |
| | Styrene unit content (% by mass) | | 15 | 15 | 15 | 9 | 9 | 15 | 15 |
| | Coupling rate (%) | | - | - | - | 60 | 60 | - | - |
| | Hydrogenation rate (%) | | 98 | 98 | 98 | 98 | 98 | 98 | 98 |
| | MRF (g/10 min) | | 30 | 30 | 30 | 7 | 7 | 15 | 15 |
| Component (I) | % by mass | | 5 | 5 | 5 | 5 | 5 | 5 | 5 |
| Component (II-1): PP | % by mass | | 68 | 68 | 68 | 68 | 68 | 68 | 68 |
| Component (II-2): PLA | % by mass | | 27 | 27 | 27 | 27 | 27 | 27 | 27 |
| Rigidity | MPa | | 1180 | 1260 | 1260 | 1320 | 1380 | 1140 | 1200 |
| Impact resistance | KJ/m² | | 3 | 2.2 | 2.4 | 3.2 | 2.4 | 4.8 | 3.4 |
| Surface impact resistance | J | | 6 | 4 | 2 | 4 | 2 | 11 | 7 |
| Tensile elongation at break | % | | 12 | 19 | 10 | 5 | 3 | 20 | 12 |
| Specularity | | | ○ | ○ | ○ | ○ | ○ | ○ | ○ |
| Delamination | | | ○ | ○ | ○ | ○ | ○ | ○ | ○ |

| | | | | | | | | | |
|---|---|---|---|---|---|---|---|---|---|
| Component (I): hydrated conjugated diene polymer obtained in each of Examples and the like PLA: polylactic acid (trade name "Ingeo 3001D" manufactured by Nature Works LLC) PP: polypropylene (trade name "BC06C" manufactured by Japan Polypropylene Corporation) Processing temperature: 200°C | | | | | | | | | |

### [Table 6]

**Table 6**

| | | | Example 4D | Comparative Example 4D | Example 5D | Comparative Example 5D | Example 6D | Comparative Example 6D |
|---|---|---|---|---|---|---|---|---|
| | Kind | | synthesized in Example 4C | synthesized in Comparative Example 4C | synthesized in Example 5C | synthesized in Comparative Example 5C | synthesized in Example 6C | synthesized in Comparative Example 6C |
| | Solvent (g) | cyclohexane | 26000 | 26000 | 24000 | 24000 | 25000 | 25000 |
| | Vinyl content regulator (g) | tetrahydrofuran (added at first-stage) | 1.3 | 1.3 | 1.2 | 1.2 | 1.3 | 1.3 |
| | | tetrahydrofuran (added at second-stage) | 31 | 31 | 52 | 52 | 52 | 52 |
| | Polymerization monomer (g) | First stage: butadiene | 973 | 973 | 1846 | 1846 | 829 | 829 |
| | | Second stage: butadiene | 2270 | 2270 | 2374 | 2374 | 3027 | 3027 |
| | | Second stage: styrene | | | 791 | 791 | | |
| | | Third stage: styrene | | | 264 | 264 | 207 | 207 |
| | | Fourth stage: butadiene | | | | | 83 | 83 |
| | Polymerization initiator (g) | n-butyllithium | 2.8 | 2.8 | 5.8 | 5.8 | 3.7 | 3.7 |
| Component (I): Hydrogenated conjugated diene polymer | | N-(tert-butyldimethylsilyl)piperazine | 5.7 | | 11.6 | | 7.4 | |
| | | piperidine | | | | | | |
| | Coupling agent (g) | methyldichlorosilane | 1.7 | 1.7 | | | | |
| | Modifier (g) | N,N-bis(trimethylsilyl)aminopropylmethyldiethoxysilane | | | | | 14 | 14 |
| | Weight-average molecular weight (×10⁴) | | 27.5 | 27.5 | 14.0 | 14.0 | 15.5 | 15.5 |
| | First-stage Vinyl bond content (mol%) | | 15 | 15 | 15 | 15 | 15 | 15 |
| | Second-stage Vinyl bond content (mol%) | | 36 | 36 | 41 | 41 | 42 | 42 |
| | Styrene unit content (% by mass) | | - | - | 20 | 20 | 5 | 5 |
| | Hydrogenation rate (%) | | 98 | 98 | 98 | 98 | 98 | 98 |
| | Coupling rate (%) | | 80 | 80 | - | - | - | - |
| | MRF (g/10 min) | | 4.5 | 4.5 | 5.5 | 5.5 | 3.0 | 3.0 |
| Component (I) | % by mass | | 10 | 10 | 10 | 10 | 10 | 10 |
| Component (II-1): PET | % by mass | | 63 | 63 | 63 | 63 | 63 | 63 |
| Component (II-2): PE | % by mass | | 27 | 27 | 27 | 27 | 27 | 27 |
| Rigidity | MPa | | 1220 | 1300 | 1140 | 1200 | 1060 | 1100 |
| Impact resistance | kJ/m² | | 12 | 2.3 | 14 | 3.4 | NB | 8 |
| Surface impact resistance | J | | 22 | 20 | 27 | 23 | 36 | 30 |
| Tensile elongation at break | % | | 330 | 200 | 280 | 240 | 490 | 430 |
| Specularity | | | ○ | ○ | ○ | ○ | ○ | ○ |
| Delamination | | | ○ | ○ | ○ | ○ | ○ | ○ |

| | | | | | | | | |
|---|---|---|---|---|---|---|---|---|
| Component (I): hydrated conjugated diene polymer obtained in each of Examples and the like PET: polyethylene terephthalate (trade name "RT523C" manufactured by Nippon Unipet Co., Ltd.) PE: polyethylene (trade name "Novatec UF331" manufactured by Japan Polypropylene Corporation) Processing temperature: 200°C | | | | | | | | |

## Claims

1. A method for producing a hydrogenated conjugated diene polymer, the method comprising a step of polymerizing at least a conjugated diene compound in the presence of a polymerization initiator composed of an amine compound having at least one structure of the formulae (x) and (y) and at least one metal compound selected from alkali metal compounds and alkaline earth metal compounds to obtain a conjugated diene polymer and
a step of hydrogenating the conjugated diene polymer. 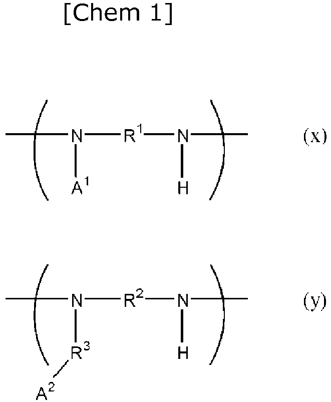 wherein, in the formula (x), R¹ is a hydrocarbylene group, the hydrocarbylene group in R¹ may contain a heteroatom as long as the hydrocarbylene group does not have an active hydrogen atom, and A¹ is a trihydrocarbylsilyl group; in the formula (y), R² and R³ are each independently a hydrocarbylene group, the hydrocarbylene group in each of R² and R³ may contain a heteroatom as long as the hydrocarbylene group does not have an active hydrogen atom, and A² is a functional group which has at least one atom selected from a nitrogen atom N, a phosphorus atom P, and a sulfur atom S, has a trihydrocarbylsilyl group, and does not have an active hydrogen atom and in which the atom that is bonded to R³ is N, P or S; and the above R¹ and A¹ may be bonded to each other to form a cyclic structure and a part of the above R², R³, and A² may be bonded to each other to form a cyclic structure.

2. The method for producing a hydrogenated conjugated diene polymer according to claim 1, wherein the amine compound having a structure represented by the formula (x) is at least one compound selected from a compound represented by the formula (x1) and a compound represented by the formula (x2): 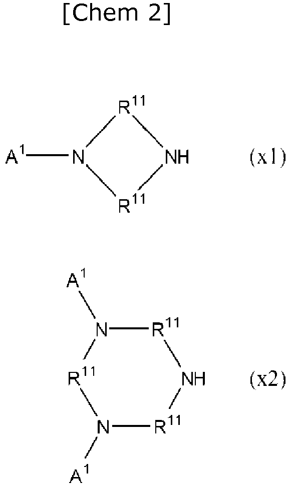 wherein, in the formulae (x1) and (x2), R¹¹'s are each independently a hydrocarbylene group, and the hydrocarbylene group in R¹¹ may contain a heteroatom as long as the hydrocarbylene group does not have an active hydrogen atom; A¹'s are each independently a trihydrocarbylsilyl group; a plurality of R¹¹'s and A¹'s may be each the same or different; and the above R¹¹ and A¹ may be bonded to each other to form a cyclic structure.

3. The method for producing a hydrogenated conjugated diene polymer according to claim 1, wherein the amine compound having a structure represented by the formula (y) is at least one compound selected from a compound represented by the formula (y1) and a compound represented by the formula (y2): 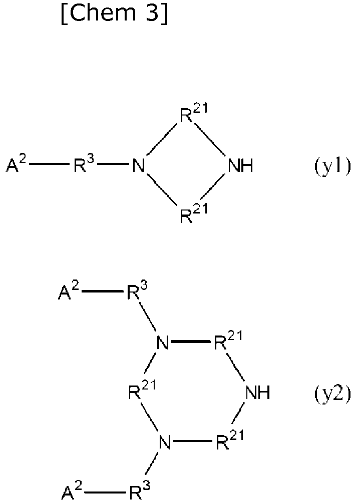 wherein, in the formulae (y1) and (y2), R²¹'s and R³'s are each independently a hydrocarbylene group, and the hydrocarbylene group in each of R²¹ and R³ may contain a heteroatom as long as the hydrocarbylene group does not have an active hydrogen atom; A² is a functional group which has at least one atom selected from a nitrogen atom N, a phosphorus atom P, and a sulfur atom S, has a trihydrocarbylsilyl group, and does not have an active hydrogen and in which the atom that is bonded to R³ is N, P or S; a plurality of R²¹'s, R³'s, and A²'s may be each the same or different; and a part of the above R²¹, R³, and A² may be bonded to each other to form a cyclic structure.

4. A hydrogenated conjugated diene polymer having at least one structure of the formulae (X) and (Y) at the polymer end: 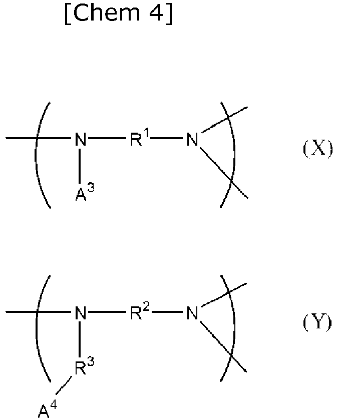 wherein, in the formula (X), R¹ is a hydrocarbylene group, and the hydrocarbylene group in R¹ may contain a heteroatom as long as the hydrocarbylene group does not have an active hydrogen atom, and A³ is a hydrogen atom or a trihydrocarbylsilyl group; in the formula (Y), R² and R³ are each independently a hydrocarbylene group, the hydrocarbylene group in each of R² and R³ may contain a heteroatom as long as the hydrocarbylene group does not have an active hydrogen atom, and A⁴ is a functional group which has at least one atom selected from a nitrogen atom N, a phosphorus atom P, and a sulfur atom S and in which all or a part of the atoms may be protected with a trihydrocarbylsilyl group and the atom that is bonded to R³ is N, P or S; and the above R¹ and A³ may be bonded to each other to form a cyclic structure and a part of the above R², R³, and A⁴ may be bonded to each other to form a cyclic structure.

5. A polymer composition comprising the hydrogenated conjugated diene polymer according to claim 4 and at least one selected from carbon black and silica.

6. A polymer composition comprising the hydrogenated conjugated diene polymer according to claim 4 and at least one polymer selected from a non-polar polymer and a polar polymer.

## Patentansprüche

1. Verfahren zur Herstellung eines hydrierten konjugierten Dienpolymers, wobei das Verfahren einen Schritt des Polymerisierens zumindest einer konjugierten Dienverbindung in Gegenwart eines Polymerisationsinitiators, der aus einer Aminverbindung mit zumindest einer Struktur der Formeln (x) und (y) und zumindest einer Metallverbindung ausgewählt aus Alkalimetallverbindungen und Erdalkalimetallverbindungen zusammengesetzt ist, um ein konjugiertes Dienpolymer zu erhalten, und
einen Schritt des Hydrierens des konjugierten Dienpolymers umfasst. 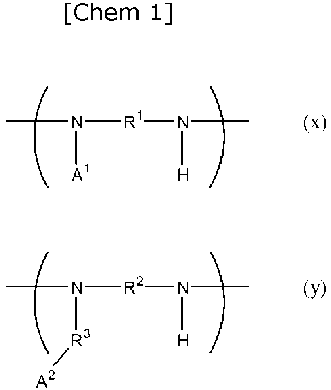 wobei in der Formel (x) R¹ eine Kohlenwasserstoffgruppe ist, wobei die Kohlenwasserstoffgruppe in R¹ ein Heteroatom enthalten kann, solange die Kohlenwasserstoffgruppe kein aktives Wasserstoffatom aufweist, und A¹ eine Trihydrocarbylsilylgruppe ist; in der Formel (y) R² und R³ jeweils unabhängig eine Kohlenwasserstoffgruppe sind, wobei die Kohlenwasserstoffgruppe in R² und R³ jeweils ein Heteroatom enthalten kann, solange die Kohlenwasserstoffgruppe kein aktives Wasserstoffatom aufweist, und A² eine funktionelle Gruppe ist, die zumindest ein Atom ausgewählt aus einem Stickstoffatom N, einem Phosphoratom P und einem Schwefelatom S aufweist, eine Trihydrocarbylsilylgruppe aufweist und kein aktives Wasserstoffatom aufweist und in der das an R³ gebundene Atom N, P oder S ist; und die obigen R¹ und A¹ unter Bildung einer cyclischen Struktur miteinander verbunden sein können, und ein Teil der obigen R², R³ und A² unter Bildung einer cyclischen Struktur miteinander verbunden sein kann.

2. Verfahren zur Herstellung eines hydrierten konjugierten Dienpolymers nach Anspruch 1, wobei die Aminverbindung mit einer durch die Formel (x) dargestellten Struktur zumindest eine Verbindung ist, ausgewählt aus einer durch die Formel (x1) dargestellten Verbindung und einer durch die Formel (x2) dargestellten Verbindung: 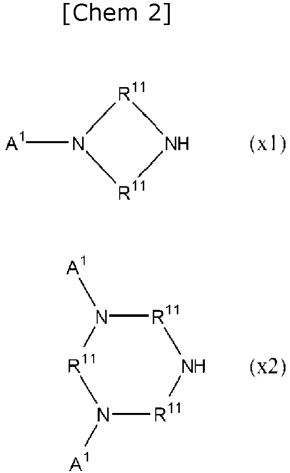 wobei in den Formeln (x1) und (x2) die R¹¹'s jeweils unabhängig eine Kohlenwasserstoffgruppe sind und die Kohlenwasserstoffgruppe in R¹¹ ein Heteroatom enthalten kann, solange die Kohlenwasserstoffgruppe kein aktives Wasserstoffatom aufweist; die A1's jeweils unabhängig eine Trihydrocarbylsilylgruppe sind; eine Mehrzahl der R¹¹'s und der A¹'s gleich oder unterschiedlich sein können; und die obigen R¹¹ und A¹ unter Bildung einer cyclischen Struktur miteinander verbunden sein können.

3. Verfahren zur Herstellung eines hydrierten konjugierten Dienpolymers nach Anspruch 1, wobei die Aminverbindung mit einer durch die Formel (y) dargestellten Struktur zumindest eine Verbindung ist, ausgewählt aus einer durch die Formel (y1) dargestellten Verbindung und einer durch die Formel (y2) dargestellten Verbindung: 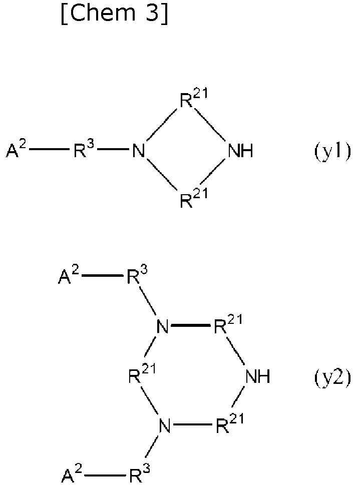 wobei in den Formeln (y1) und (y2) die R²¹'s und die R³'s jeweils unabhängig eine Kohlenwasserstoffgruppe sind und die Kohlenwasserstoffgruppe in jedem von R²¹ und R³ ein Heteroatom enthalten kann, solange die Kohlenwasserstoffgruppe kein aktives Wasserstoffatom aufweist; A² eine funktionelle Gruppe ist, die zumindest ein Atom ausgewählt aus einem Stickstoffatom N, einem Phosphoratom P und einem Schwefelatom S aufweist, eine Trihydrocarbylsilylgruppe aufweist und kein aktives Wasserstoffatom aufweist und in der das an R³ gebundene Atom N, P oder S ist; eine Mehrzahl der R²¹'s, der R³'s und der A²'s gleich oder unterschiedlich sein können; und ein Teil der obigen R²¹, R³ und A² unter Bildung einer cyclischen Struktur miteinander verbunden sein kann.

4. Hydriertes konjugiertes Dienpolymer mit zumindest einer Struktur der Formeln (X) und (Y) am Polymerende: 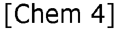 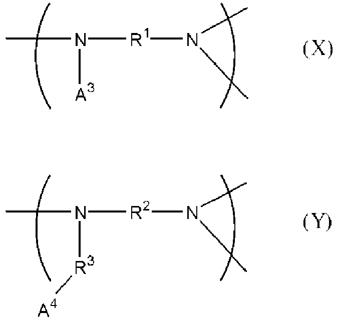 wobei in der Formel (X) R¹ eine Kohlenwasserstoffgruppe ist und die Kohlenwasserstoffgruppe in R¹ ein Heteroatom enthalten kann, solange die Kohlenwasserstoffgruppe kein aktives Wasserstoffatom aufweist, und A³ ein Wasserstoffatom oder eine Trihydrocarbylsilylgruppe ist; in der Formel (Y) R² und R³ jeweils unabhängig eine Kohlenwasserstoffgruppe sind, wobei die Kohlenwasserstoffgruppe in R² und R³ jeweils ein Heteroatom enthalten kann, solange die Kohlenwasserstoffgruppe kein aktives Wasserstoffatom aufweist, und A⁴ eine funktionelle Gruppe ist, die zumindest ein Atom ausgewählt aus einem Stickstoffatom N, einem Phosphoratom P und einem Schwefelatom S aufweist, und in der alle oder ein Teil der Atome mit einer Trihydrocarbylsilylgruppe geschützt sein können und das an R³ gebundene Atom N, P oder S ist; und die obigen R¹ und A³ unter Bildung einer cyclischen Struktur miteinander verbunden sein können, und ein Teil der obigen R², R³ und A⁴ unter Bildung einer cyclischen Struktur miteinander verbunden sein kann.

5. Polymerzusammensetzung, umfassend das hydrierte konjugierte Dienpolymer nach Anspruch 4 und zumindest eines ausgewählt aus Carbon Black und Siliciumdioxid.

6. Polymerzusammensetzung, umfassend das hydrierte konjugierte Dienpolymer nach Anspruch 4 und zumindest ein Polymer ausgewählt aus einem nicht-polaren Polymer und einem polaren Polymer.

## Revendications

1. Procédé de production d'un polymère diène conjugué hydrogéné, le procédé comprenant une étape de polymérisation d'au moins un composé diène conjugué en la présence d'un amorceur de polymérisation constitué d'un composé amine ayant au moins une structure des formules (x) et (y) et d'au moins un composé métallique choisi parmi des composés de métal alcalin et des composés de métal alcalino-terreux pour obtenir un polymère diène conjugué et
une étape d'hydrogénation du polymère diène conjugué. 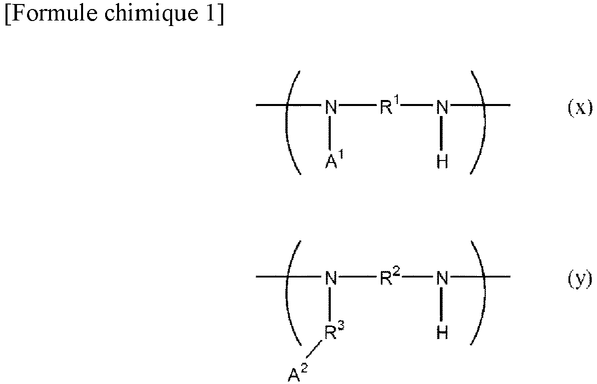 dans lequel, dans la formule (x), R¹ est un groupe hydrocarbylène, le groupe hydrocarbylène dans R¹ peut contenir un hétéroatome tant que le groupe hydrocarbylène n'a pas d'atome d'hydrogène actif, et A¹ est un groupe trihydrocarbylsilyle ; dans la formule (y), R² et R³ sont chacun indépendamment un groupe hydrocarbylène, le groupe hydrocarbylène dans chacun de R² et R³ peut contenir un hétéroatome tant que le groupe hydrocarbylène n'a pas d'atome d'hydrogène actif ; et A² est un groupe fonctionnel qui a au moins un atome choisi parmi un atome d'azote N, un atome de phosphore P et un atome de soufre S, a un groupe trihydrocarbylsilyle et n'a pas d'atome d'hydrogène actif et dans lequel l'atome qui est lié à R³ est N, P ou S ; et les R¹ et A¹ ci-dessus peuvent être liés l'un à l'autre pour former une structure cyclique et une partie des R², R³ et A² ci-dessus peuvent être liés l'un à l'autre pour former une structure cyclique.

2. Procédé de production d'un polymère diène conjugué hydrogéné selon la revendication 1, dans lequel le composé amine ayant une structure représentée par la formule (x) est au moins un composé choisi parmi un composé représenté par la formule (x1) et un composé représenté par la formule (x2) : 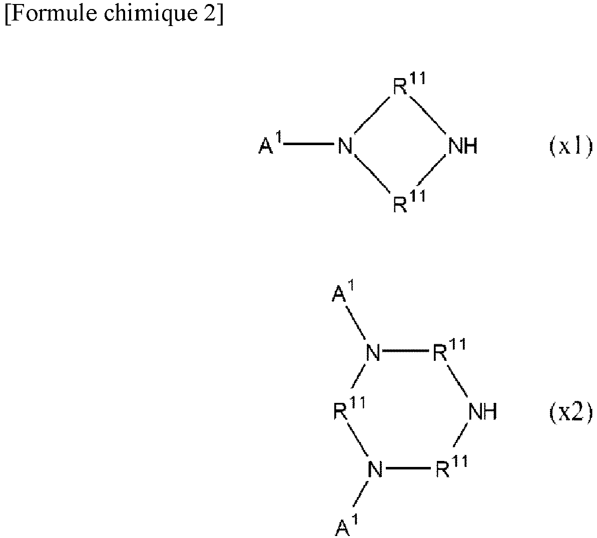 dans lequel, dans les formules (x1) et (x2), les R¹¹ sont chacun indépendamment un groupe hydrocarbylène, et le groupe hydrocarbylène dans R¹¹ peut contenir un hétéroatome tant que le groupe hydrocarbylène n'a pas d'atome d'hydrogène actif; les A¹ sont chacun indépendamment un groupe trihydrocarbylsilyle ; une pluralité de R¹¹ et de A¹ peuvent chacun être identiques ou différents ; et les R¹¹ et A¹ ci-dessus peuvent être liés les uns aux autres pour former une structure cyclique.

3. Procédé de production d'un polymère diène conjugué hydrogéné selon la revendication 1, dans lequel le composé amine ayant une structure représentée par la formule (y) est au moins un composé choisi parmi un composé représenté par la formule (y1) et un composé représenté par la formule (y2) : 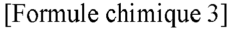 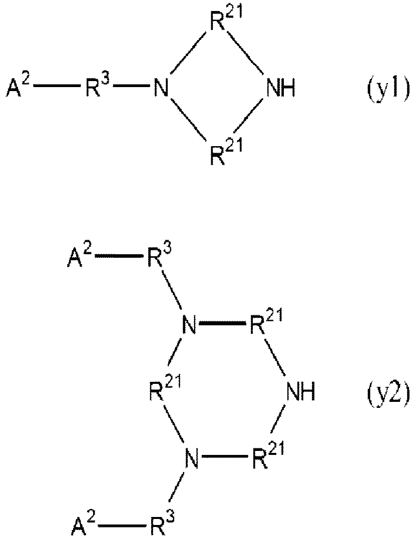 dans lequel, dans les formules (y1) et (y2), les R²¹ et R³ sont chacun indépendamment un groupe hydrocarbylène, et le groupe hydrocarbylène dans chacun des R²¹ et R³ peut contenir un hétéroatome tant que le groupe hydrocarbylène n'a pas d'atome d'hydrogène actif ; A² est un groupe fonctionnel qui a au moins un atome choisi parmi un atome d'azote N, un atome de phosphore P et un atome de soufre S, a un groupe trihydrocarbylsilyle et n'a pas d'atome d'hydrogène actif et dans lequel l'atome qui est lié à R³ est N, P ou S ; une pluralité de R²¹, R³ et A² peuvent chacun être identiques ou différents ; et une partie des R²¹, R³ et A² ci-dessus peuvent être liés les uns aux autres pour former une structure cyclique.

4. Polymère diène conjugué hydrogéné ayant au moins une structure des formules (X) et (Y) à l'extrémité polymère : 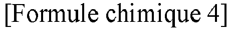 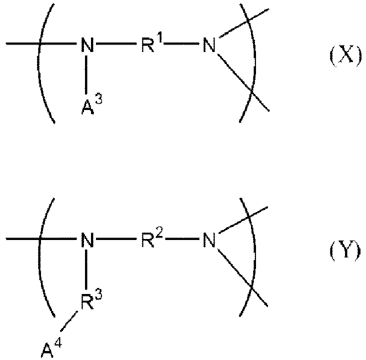 dans lequel, dans la formule (X), R¹ est un groupe hydrocarbylène, et le groupe hydrocarbylène dans R¹ peut contenir un hétéroatome tant que le groupe hydrocarbylène n'a pas d'atome d'hydrogène actif ; et A³ est un atome d'hydrogène ou un groupe trihydrocarbylsilyle ; dans la formule (Y), R² et R³ sont chacun indépendamment un groupe hydrocarbylène, le groupe hydrocarbylène dans chacun de R² et R³ peut contenir un hétéroatome tant que le groupe hydrocarbylène n'a pas d'atome d'hydrogène actif ; et A⁴ est un groupe fonctionnel qui a au moins un atome choisi parmi un atome d'azote N, un atome de phosphore P et un atome de soufre S et dans lequel l'ensemble ou une partie des atomes peuvent être protégés avec un groupe trihydrocarbylsilyle et l'atome qui est lié à R³ est N, P ou S ; et les R¹ et A³ ci-dessus peuvent être liés l'un à l'autre pour former une structure cyclique et une partie des R², R³ et A⁴ ci-dessus peuvent être liés l'un à l'autre pour former une structure cyclique.

5. Composition polymère comprenant le polymère diène conjugué hydrogéné selon la revendication 4 et au moins un choisi parmi le noir de carbone et la silice.

6. Composition polymère comprenant le polymère diène conjugué hydrogéné selon la revendication 4 et au moins un polymère choisi parmi un polymère non polaire et un polymère polaire.
